(19) Europäisches Patentamt / European Patent Office / Office européen des brevets

(11) **EP 4 446 067 A1**

(12) **EUROPEAN PATENT APPLICATION**

(43) Date of publication:
**16.10.2024 Bulletin 2024/42**

(21) Application number: **24164887.2**

(22) Date of filing: **20.03.2024**

(51) International Patent Classification (IPC):
**B25J 9/16** $^{(2006.01)}$

(52) Cooperative Patent Classification (CPC):
**B25J 9/1633; B25J 9/1664; B25J 9/1666;**
G05B 2219/37373; G05B 2219/45135

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 US 202363453208 P**
**27.02.2024 US 202418588368**

(71) Applicant: **Naver Corporation**
**Seongnam-si, Gyeonggi-do 13561 (KR)**

(72) Inventor: **Dance, Christopher**
**38240 Meylan (FR)**

(74) Representative: **Grünecker Patent- und Rechtsanwälte**
**PartG mbB**
**Leopoldstraße 4**
**80802 München (DE)**

(54) **SYSTEMS AND METHODS FOR DETERMINING REACTIONS DUE TO FRICTION OF OBJECTS WITH MULTIPLE CONTACTS**

(57) In a mechanical system with an object having a set of two or more contacts, methods are disclosed for determining object motion by computing the tangential generalized reaction impulse and force. The methods includes receiving input values that include an initial generalized position and an initial generalized velocity of the object at time t; and computing a generalized force. The methods further includes computing, respectively for the reaction impulse and force: a generalized reaction impulse and force, and a tangential generalized reaction impulse and force. The methods use the tangential generalized reaction impulse and force to, respectively, compute an end-of-interval generalized position and velocity, and a generalized acceleration, which are output for use by an application.

FIG. 1

**Description**

FIELD

The present disclosure relates to autonomous object control based on modelling of discrete mechanical systems that include rigid-body dynamics. More particularly, the present disclosure relates to autonomous object control based on systems and methods for determining reactions due to friction in multi-contact systems.

BACKGROUND

Discrete mechanical systems, which may be used for determining motion of objects in space where the number of degrees of freedom of the objects is finite (including degrees of freedom describing deformations), finds applications today in multiple fields including autonomous objects and virtual reality. Systems using discrete mechanical systems to model objects must account for frictional contacts between objects to yield accurate results, for example a robot hand and an object grasped by the robot hand. As needs for real-time computation of rigid-body dynamics grows, there continues to exist a need for faster and more accurate systems and methods for modeling real-world systems using rigid-body dynamics for predicting the motion of objects.

SUMMARY

According to the invention, a control module of an autonomous object is capable of predicting motion of one or more objects in space to avoid contacting an object, to contact an object, to interact with, move, or grasp an object.
In a feature, a computer-implemented method, using a computer having one or more processors and memory, determines for an object having a set of two or more contacts and having at time $t$ an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$. The method includes: computing a generalized force $f$ over the interval, which is a summary of forces acting on the object other than forces due to the set of contacts, and which is used to define energy over the interval $h$; computing a normal generalized reaction impulse $r_n$ acting on the object; computing a tangential generalized reaction impulse $r_t$ acting on the object; and using the tangential generalized reaction impulse $r_t$ to compute the end-of-interval generalized position $q_{t+h}$ and the end-of-interval generalized velocity $\dot{q}_{t+h}$ of the object. The method further includes, computing the tangential generalized reaction impulse $r_t$ by applying the following constraints to an objective function minimizing energy over the interval $h$: (a) associating each contact in the set of contacts with a friction cone in a space of generalized impulses to define a set of friction cones; (b) summing one term from each friction cone in the set of friction cones, minus the normal generalized reaction impulse $r_n$; and (c) constraining the tangential generalized reaction impulse $r_t$ to be orthogonal to the normal generalized reaction impulse $r_n$ and to have a non-positive inner product with the normal direction of each contact in the set of contacts. When the object is an autonomous object, the method may further comprise, based on at least one of the end-of-interval generalized position $q_{t+h}$ and the end-of-interval generalized velocity $\dot{q}_{t+h}$ of the object, actuating a component of the autonomous object. In other cases, the method may further comprise, based on at least one of the end-of-interval generalized position $q_{t+h}$ and the end-of-interval generalized velocity $\dot{q}_{t+h}$ of the object, at least one of steering, accelerating, and decelerating an autonomous object so that the autonomous object avoids contacting the object, contacts the object, or manipulates the object.
In a feature, a computer-implemented method, using a computer having one or more processors and memory, determines for an object having a set of two or more contacts and having at time t an initial generalized position $q_t$ and an initial generalized velocity $\dot{q}_t$, the object's generalized acceleration $\ddot{q}_t$. The method includes: computing a generalized force $f$ which is a summary of forces acting on the object other than forces due to the set of contacts; computing a normal generalized reaction force $R_n$ acting on the object; computing a tangential generalized reaction force $R_t$ acting on the object using the computed generalized force $f$ to account for contacts associated with zero relative velocity at time $t$; and using the tangential generalized reaction force $R_t$ to compute the generalized acceleration $\ddot{q}_t$ of the object. The method further includes computing the tangential generalized reaction force $R_t$ by applying the following constraints to an objective function maximizing power dissipated by friction: (a) associating each contact in the set of contacts with a friction cone in a space of generalized impulses to define a set of friction cones; (b) summing one term from each friction cone in the set of friction cones, minus the normal generalized reaction force $R_n$; and (c) constraining the tangential generalized reaction force $R_t$ to be orthogonal to the normal generalized reaction force $R_n$ and to have a non-positive inner product with the normal direction of each contact in the set of contacts. When the object is an autonomous object, the method may further comprise, based on the computed generalized acceleration $\ddot{q}_t$ of the object, actuating a component of the autonomous object. In other cases, the method may further comprise, based on the computed generalized acceleration $\ddot{q}_t$ of the object, at least one of steering, accelerating, and decelerating an autonomous object so that the autonomous object avoids contacting the object, contacts the object, or manipulates the object.

In a feature, a computer-implemented method, executed by one or more processors and memory, for determining for an object having a set of two or more contacts and having at time $t$ an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$ is described. The method includes: computing a generalized force $f$ over the interval $h$, the generalized force being a summary of forces acting on the object other than forces due to the set of contacts, and which is used to define energy over the interval $h$; computing a normal generalized reaction impulse $r_n$ acting on the object; computing a tangential generalized reaction impulse $r_t$ acting on the object; and based on the tangential generalized reaction impulse $r_t$, computing the end-of-interval generalized position $q_{t+h}$ and the end-of-interval generalized velocity $\dot{q}_{t+h}$ of the object; where the computing the tangential generalized reaction impulse $r_t$ further includes applying the following constraints to an objective function minimizing energy over the interval $h$: (a) associating each contact in the set of contacts with a friction cone in a space of generalized impulses to define a set of friction cones; (b) summing one term from each friction cone in the set of friction cones, minus the normal generalized reaction impulse $r_n$; and (c) constraining the tangential generalized reaction impulse $r_t$ to be orthogonal to the normal generalized reaction impulse $r_n$ and to have a non-positive inner product with the normal direction of each contact in the set of contacts. When the object is an autonomous object, the method may further comprise, based on at least one of the end-of-interval generalized position $q_{t+h}$ and the end-of-interval generalized velocity $\dot{q}_{t+h}$ of the object, actuating a component of the autonomous object. In other cases, the method may further comprise, based on at least one of the end-of-interval generalized position $q_{t+h}$ and the end-of-interval generalized velocity $\dot{q}_{t+h}$ of the object, at least one of steering, accelerating, and decelerating an autonomous object so that the autonomous object avoids contacting the object, contacts the object, or manipulates the object.

Unlike existing approaches, the constraints imposed in the disclosed approach always have a solution. Further, the approach gives a unique solution for the tangential generalized reaction and always conserves or dissipates energy during impacts.

In certain situations involving multiple contacts, prior art approaches predict that the tangential generalized reaction is, in direct contradiction to everyday observations of physical reality. Unlike these approaches, the disclosed approach gives non-zero results in situations with multiple contacts.

Moreover, the disclosed approach involves a well-defined continuous-time evolution problem even at times where there are jumps in the velocity.

In further features, the method further includes computing an intermediate generalized position $q_m$ of the object over the interval $h$ by taking a time-step duration that is of length $h/2$.

In further features, the method further includes the intermediate generalized position $q_m$ is given by a midpoint generalized position at time $t_m = t + h/2$ by computing:

$$q_m \leftarrow q_t + \frac{h}{2} K(q_t)\dot{q}_t,$$

where $K$ is a matrix-valued function.

In further features, the generalized force $f$ over the interval $h$ is given by $M_m^{-1} f_m$, where $M_m$ is the midpoint mass matrix and $f_m$ is the midpoint force.

In further features, the determining the end-of-interval generalized velocity $\dot{q}_{t+h}$ is determined by computing:

$$\dot{q}_{t+h} \leftarrow \dot{q}_t + h M_m^{-1} f_m + M_m^{-1}(r_n + r_t).$$

In further features, the determining the end-of-interval generalized velocity $\dot{q}_{t+h}$ is determined by computing an end-of-interval free-velocity $\dot{q}_f$ given by:

$$\dot{q}_f \leftarrow \dot{q}_t + h M_m^{-1} f_m.$$

In further features, the objective function corresponding to minimizing energy over the interval $h$ is given by:

$$\left\| M_m^{-1/2} \left( M_m \dot{q}_f + r_t \right) \right\|_2.$$

In further features, the determining the end-of-interval generalized position $\boldsymbol{q}_{t+h}$ is determined by computing:

$$\boldsymbol{q}_{t+h} \leftarrow \boldsymbol{q}_m + \frac{h}{2}\dot{\boldsymbol{q}}_{t+h} \ .$$

In further features, the computing the normal generalized reaction impulse $\boldsymbol{r}_n$ is approximated over the interval $h$ by computing:

$$\boldsymbol{r}_n \leftarrow \sum_{j \in J_m}\left(\Lambda_j^+ + \Lambda_j^-\right)\boldsymbol{n}_{j,m}^*,$$

where $\Lambda_j^+$ and $\Lambda_j^-$ are Lagrange multipliers and $\boldsymbol{n}_{j,m}^*$ are vectors.

In further features, the one term from each friction cone is determined in a friction cone by multiplying a tangential contact Jacobian by a tangential cone-position variable $\boldsymbol{w}$ and adding it to the result of multiplying a normal contact Jacobian by a normal cone-position variable $y$.

In further features, the end-of-interval generalized position $\boldsymbol{q}_{t+h}$ and the end-of-interval generalized velocity $\dot{\boldsymbol{q}}_{t+h}$ of the object are computed to perform one of system identification, trajectory optimization, learning control policies, and design of mechanical systems.

In further features, the method further includes, based on at least one of the end-of-interval generalized position $\boldsymbol{q}_{t+h}$ and the end-of-interval generalized velocity $\dot{\boldsymbol{q}}_{t+h}$ of the object, at least one of steering a vehicle, accelerating the vehicle, and decelerating the vehicle.

In further features, the method further includes, based on at least one of the end-of-interval generalized position $\boldsymbol{q}_{t+h}$ and the end-of-interval generalized velocity $\dot{\boldsymbol{q}}_{t+h}$ of the object, actuating a component of the object, wherein the object is a robot.

In a feature, a computer-implemented method, executed by one or more processors and memory, for determining for an object having a set of two or more contacts and having at time $t$ an initial generalized position $\boldsymbol{q}_t$ and an initial generalized velocity $\dot{\boldsymbol{q}}_t$, the object's generalized acceleration $\ddot{\boldsymbol{q}}_t$ is described and includes: computing a generalized force $\boldsymbol{f}$ which is a summary of forces acting on the object other than forces due to the set of contacts; computing a normal generalized reaction force $\boldsymbol{R}_n$ acting on the object; computing a tangential generalized reaction force $\boldsymbol{R}_t$ acting on the object using the computed generalized force $\boldsymbol{f}$ to account for contacts associated with zero relative velocity at time $t$; and using the tangential generalized reaction force $\boldsymbol{R}_t$ to compute the generalized acceleration $\ddot{\boldsymbol{q}}_t$ of the object; where the computing the tangential generalized reaction force $\boldsymbol{R}_t$ further comprises applying the following constraints to an objective function maximizing power dissipated by friction: (a) associating each contact in the set of contacts with a friction cone in a space of generalized impulses to define a set of friction cones; (b) summing one term from each friction cone in the set of friction cones, minus the normal generalized reaction force $\boldsymbol{R}_n$; and (c) constraining the tangential generalized reaction force $\boldsymbol{R}_t$ to be orthogonal to the normal generalized reaction force $\boldsymbol{R}_n$ and to have a non-positive inner product with the normal direction of each contact in the set of contacts. When the object is an autonomous object, the method may further comprise, based on the computed generalized acceleration $\ddot{\boldsymbol{q}}_t$ of the object, actuating a component of the autonomous object. In other cases, the method may further comprise, based on the computed generalized acceleration $\ddot{\boldsymbol{q}}_t$ of the object, at least one of steering, accelerating, and decelerating an autonomous object so that the autonomous object avoids contacting the object, contacts the object, or manipulates the object.

In further features, the power dissipated by friction is given by minus the scalar product of the tangential generalized reaction force $\boldsymbol{R}_t$ and the initial generalized velocity $\dot{\boldsymbol{q}}_t$.

In further features, the end-of-interval generalized position $\boldsymbol{q}_{t+h}$ and the end-of-interval generalized velocity $\dot{\boldsymbol{q}}_{t+h}$ of the object are computed to perform one of system identification, trajectory optimization, learning control policies, and design of mechanical systems.

In a feature, a system for determining, in a mechanical system with an object having a set of two or more contacts, a tangential generalized reaction due to friction given a normal generalized reaction is described and includes: one or more processors, and memory comprising instructions that, when executed by the one or more processors, cause the system to associate each contact of the object in the set of contacts with a friction cone and a normal direction in a space of generalized forces or impulses, the associating defining a set of friction cones; and constrain the tangential generalized reaction to be a sum with one term from each friction cone in the set of friction cones, minus the normal generalized reaction; and output the tangential generalized reaction, where the tangential generalized reaction is constrained to be orthogonal to the normal generalized reaction and have a non-positive inner product with each contact's normal direction. The instructions, when executed by the one or more processors, further cause the system to, based on the tangential generalized reaction, actuate a component of the object, wherein the object is an autonomous object, or, based on the tangential generalized reaction, at least one of steer, accelerate, and decelerate an autonomous object so that the autonomous object avoids contacting the object, contacts the object, or manipulates the object.

In further features, the autonomous object may be a robot, a vehicle, or another autonomous machine. Accordingly, the mechanical system includes the robot or the vehicle and one or more objects.

In further features, the one term from each friction cone is determined in a friction cone by multiplying a tangential contact Jacobian by a tangential cone-position variable $w$ and adding it to the result of multiplying a normal contact Jacobian by a normal cone-position variable $\gamma$.

In a feature, a system for determining, for an object having a set of two or more contacts and having at time $t$ an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$ is described and includes: one or more processors; and memory including code that, when executed by the one or more processors perform to: compute a generalized force $f$ over the interval, which is a summary of forces acting on the system other than forces due to the set of contacts, and which is used to define energy over the interval $h$; compute a normal generalized reaction impulse $r_n$ acting on the object; compute a tangential generalized reaction impulse $r_t$ acting on the object; and based on the tangential generalized reaction impulse $r_t$, compute the end-of-interval generalized position $q_{t+h}$ and the end-of-interval generalized velocity $\dot{q}_{t+h}$ of the object, where the computing the tangential generalized reaction impulse $r_t$ further includes applying the following constraints to an objective function minimizing energy over the interval $h$: (a) associating each contact in the set of contacts with a friction cone in a space of generalized impulses to define a set of friction cones; (b) summing one term from each friction cone in the set of friction cones, minus the normal generalized reaction impulse $r_n$; and (c) constraining the tangential generalized reaction impulse $r_t$ to be orthogonal to the normal generalized reaction impulse $r_n$ and to have a non-positive inner product with the normal direction of each contact in the set of contacts. When the object is an autonomous object, the system may further be configured to, based on at least one of the end-of-interval generalized position $q_{t+h}$ and the end-of-interval generalized velocity $\dot{q}_{t+h}$ of the object, actuate a component of the autonomous object. In other cases, the system may further be configured to, based on at least one of the end-of-interval generalized position $q_{t+h}$ and the end-of-interval generalized velocity $\dot{q}_{t+h}$ of the object, at least one of steer, accelerate, and decelerate an autonomous object so that the autonomous object avoids contacting the object, contacts the object, or manipulates the object

In further features, the memory further includes code for a learning model that, when executed by the one or more processors, performs the following functions including computing an intermediate generalized position $q_m$ of the object over the interval $h$ by taking a time-step duration that is of length $h/2$.

In further features, the intermediate generalized position $q_m$ is given by a midpoint generalized position at time $t_m = t + h/2$ by computing:

$$q_m \leftarrow q_t + \frac{h}{2} K(q_t)\dot{q}_t,$$

where $K$ is a matrix-valued function.

In further features, the generalized force $f$ over the interval $h$ is given by $M_m^{-1} f_m$, where $M_m$ is the midpoint mass matrix and $f_m$ is the midpoint force.

In further features, the determining the end-of-interval generalized velocity $\dot{q}_{t+h}$ is determined by computing:

$$\dot{q}_{t+h} \leftarrow \dot{q}_t + h M_{mAcc}^{-1} f_m + M_m^{-1}(r_n + r_t).$$

In further, the determining the end-of-interval generalized velocity $\dot{q}_{t+h}$ is determined by computing an end-of-interval free-velocity $\dot{q}_f$ given by:

$$\dot{q}_f \leftarrow \dot{q}_t + h M_m^{-1} f_m.$$

In further features, the objective function corresponding to minimizing energy over the interval $h$ is given by:

$$\left\| M_m^{-1/2}\left( M_m \dot{q}_f + r_t \right) \right\|_2.$$

In further features, the determining the end-of-interval generalized position $q_{t+h}$ is determined by computing

$$q_{t+h} \leftarrow q_m + \frac{h}{2}\dot{q}_{t+h}.$$

In further features, the computing the normal generalized reaction impulse $r_n$ is approximated over the interval $h$ by computing:

$$r_n \leftarrow \sum_{j \in J_m}\left( \Lambda_j^+ + \Lambda_j^- \right) n_{j,m}^*,$$

where $\Lambda_j^+$ and $\Lambda_j^-$ are Lagrange multipliers and $n_{j,m}^*$ are vectors.

In further features, the one term from each friction cone is determined in a friction cone by multiplying a tangential contact Jacobian by a tangential cone-position variable $w$ and adding it to the result of multiplying a normal contact Jacobian by a normal cone-position variable $\gamma$.

In further features, the end-of-interval generalized position $q_{t+h}$ and the end-of-interval generalized velocity $\dot{q}_{t+h}$ of the object is computed to perform one of system identification, trajectory optimization, learning control policies, and design of mechanical systems.

In a feature, a system, for determining for an object having a set of two or more contacts and having at time $t$ an initial generalized position $q_t$ and an initial generalized velocity $\dot{q}_t$, the object's generalized acceleration $\ddot{q}_t$, is described and includes: one or more processors; memory including code that, when executed by the one or more processors perform to: compute a generalized force $f$ which is a summary of forces acting on the system other than forces due to the set of contacts; compute a normal generalized reaction force $R_n$ acting on the object; compute a tangential generalized reaction force $R_t$ acting on the object using the computed generalized force $f$ to account for contacts associated with zero relative velocity at time $t$; and based on the tangential generalized reaction force $R_t$, compute the generalized acceleration $\ddot{q}_t$ of the object, where the computing the tangential generalized reaction force $R_t$ further includes applying the following constraints to an objective function maximizing power dissipated by friction: (a) associating each contact in the set of contacts with a friction cone in a space of generalized impulses to define a set of friction cones; (b) summing one term from each friction cone in the set of friction cones, minus the normal generalized reaction force $R_n$; and (c) constraining the tangential generalized reaction force $R_t$ to be orthogonal to the normal generalized reaction force $R_n$ and to have a non-positive inner product with the normal direction of each contact in the set of contacts. When the object is an autonomous object, the system may further be configured to, based on the computed generalized acceleration $\ddot{q}_t$ of the object, actuate a component of the autonomous object. In other cases, the system may further be configured to, based on the computed generalized acceleration $\ddot{q}_t$ of the object, at least one of steer, accelerate, and decelerate an autonomous object, so that the autonomous object avoids contacting the object, contacts the object, or manipulates the object.

In further features, the autonomous object may be a robot, a vehicle, or another autonomous machine. Accordingly, the mechanical system is the robot or the vehicle and one or more objects.

In further features, the power dissipated by friction is given by minus the scalar product of the tangential generalized reaction force $R_t$ and the initial generalized velocity $\dot{q}_t$.

In further features, the end-of-interval generalized position $q_{t+h}$ and the end-of-interval generalized velocity $\dot{q}_{t+h}$ of the object is computed to perform one of system identification, trajectory optimization, learning control policies, and design of mechanical systems.

Further areas of applicability of the present disclosure will become apparent from the detailed description, the claims and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings, wherein:

Figure 1 illustrates an example of a system architecture in which the methods according to the present disclosure may be performed;

Figure 2 is a flow diagram depicting an example method for determining the generalized position and generalized velocity of the motion of an object;

Figures 3A, 3B, 3C, and 3D depict a conceptual representation of a tangential reaction of two individual contacts;

Figure 4 further depicts the conceptual representation of a tangential reaction shown in Figures 3A, 3B, 3C and 3D;

Figure 5A and Figure 5B sets forth an implementation in pseudo-code of the example method for determining the motion of objects in Figure 2;

Figure 6 is a flow diagram depicting an example method for determining the generalized acceleration of the motion of an object; and

Figure 7 sets forth a flow diagram overlaying the methods for determining object motion by computing the tangential generalized reaction impulse and tangential generalized reaction force set forth in Figures 2 and 6, respectively.

In the drawings, reference numbers may be reused to identify similar and/or identical elements.

DETAILED DESCRIPTION

## 1. System Architecture

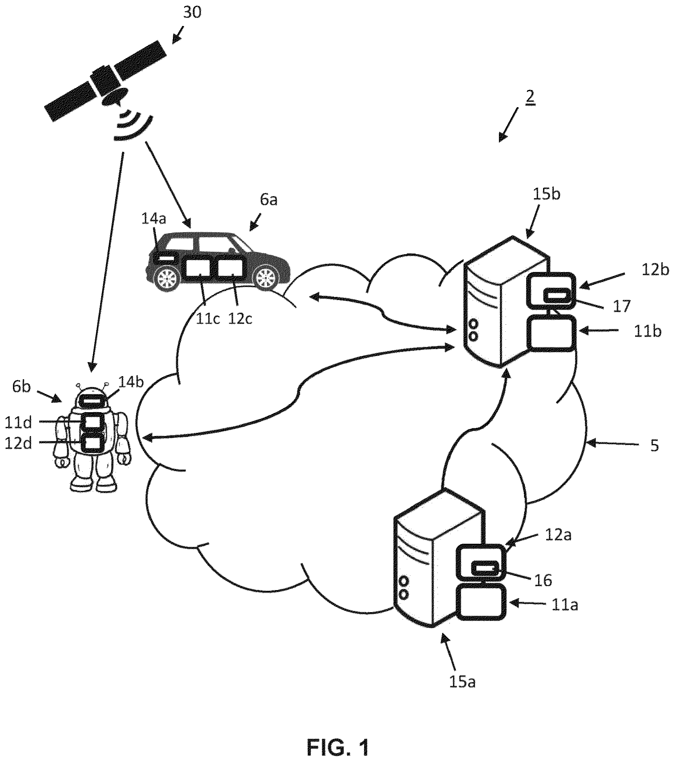

The systems and methods for determining reactions due to friction in multi-contact systems disclosed hereunder may be implemented within a system 2 architected as illustrated in Figure 1, which includes one or more servers (server modules) 15 and one or more (e.g., autonomous) objects (modules) 6, which include one or more processors 11 and memory 12, such as autonomous vehicle 6a or autonomous robot 6b, located using for example a positioning system 14 installed on the autonomous object 6. The positioning system 14 may include a geo-positioning system (GPS), cellular positioning system, indoor positioning system (IPS), including beacons, radio frequency identifier (RFID), WiFi and geomagnetic, or a combination thereof. Servers 15 and autonomous objects 6 may communicate over a network 5 (which may be wireless and/or wired) such as the Internet for data exchange. Each server 15 includes one or more processors such as processor 11 and memory 12 such as a hard disk, the processor(s) configured to perform its functions via execution of code.

In one embodiment, the server 15a (with processor 11a and memory 12a) may include a map module 16 in memory 12a containing outdoor and indoor maps, and the server 15b (with processor 11b and memory 12b) may include a trajectory estimation module 17 in memory 12b that computes a trajectory of autonomous objects 6 which accounts for reactions due to friction. In one implementation, the methods of the present disclosure operate on server 15b of system 2. In another implementation, it is noted that the two servers 15a and 15b may be merged/integrated in one server. In yet another implementation, the functionality of the servers 15 may be merged with the autonomous objects 6.

These and other mechanical systems (e.g., autonomous objects 6 in Figure 1) are described herein in terms of the 3D (three-dimensional) coordinates of predetermined points of its links or joints. The time-derivative of any such coordinate may be referred to as a real-world velocity, and a 3D force acting on any such point may be referred to as a real-world force. Alternatively, the configuration of a mechanical system may be defined using some other parameters, like the angles made by the joints of a robot arm, and such descriptions may be referred to as generalized coordinates and their time derivatives may be referred to as generalized velocities. Further, the forces and torques acting on a mechanism may be summarized using a vector of the same dimension as the mechanism's generalized velocity, which is known as a generalized force; this is done in such a way that the product of a component of the generalized velocity with the corresponding component of the generalized force has the units of power (e.g., energy per unit time). For instance, if a generalized velocity component is an angular velocity, then the corresponding generalized force component is a torque. A real-world coordinate system (or space) for a particle is a possible choice of a generalized coordinate system for the particle.

Further, a real-world description of mechanical systems is about 3D forces acting at specific 3D points in a 3D world (or 2D forces acting at specific 2D points in a 2D world), whereas it is not necessary to state where a generalized force acts. One useful consequence of this observation is that while the real-world description of a rigid body making contact with another body over an area may involve the specification of a pressure field over that contact area, which gives the pressure as a function of position, only a single finite-dimensional vector (the generalized force) is needed to describe everything that needs to be known about that pressure field to predict the motion of the bodies over the area.

## 2. Determining Object Motion by Computing Reaction Impulse

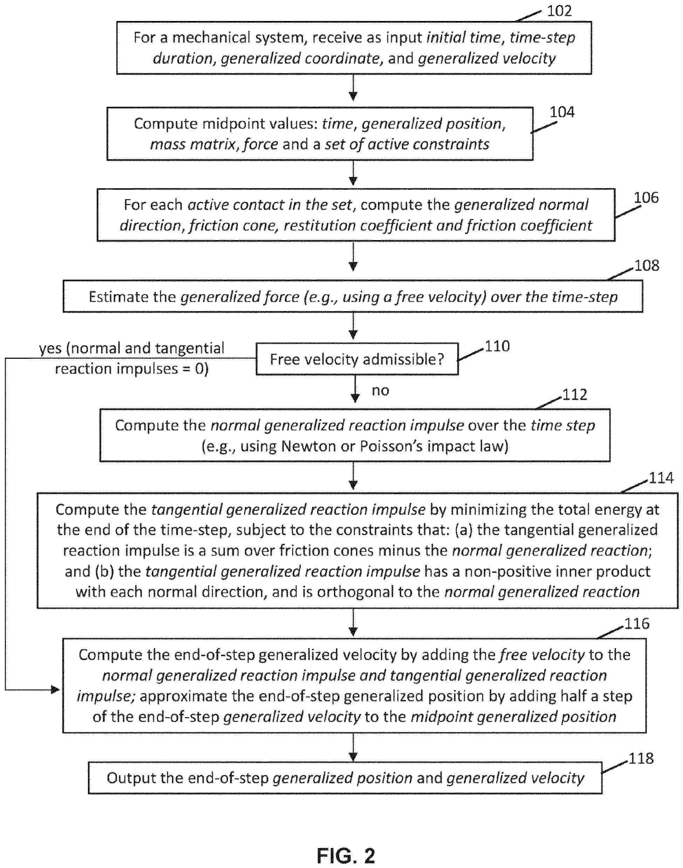

Figure 2 is a flow diagram, which may be implemented by one or more modules of the system 2 in Figure 1 or one or more processors, that depicts an example method for determining the generalized position and velocity of the motion of an object, such as autonomous object 6, that accounts for reactions due to friction in multi-contact systems. In one embodiment, the method is performed by trajectory estimation module 17 shown in Figure 1.

The method depicted in the flowchart of Figure 2 employs a time-stepping function, such as that described by Alexandre Charles, Fabien Casenave, and Christoph Glocker, in "A catching-up algorithm for multibody dynamics with impacts and dry friction", Computer Methods in Applied Mechanics and Engineering 334 (2018): 208-237, which is incorporated herein in its entirety (hereinafter "Charles et al. (2018)"). Unlike the time-stepping function described by Charles et al. (2018), the time-stepping function depicted in Figure 2 computes the normal reaction using a different yield set (as defined by Charles et al. (2018)) and computes a tangential reaction due to friction.

In addition, the time-stepping function depicted in Figure 2 may access several associated functions and/or parameters that describe the mechanical system (e.g., a robot and one or more objects that the robot may interact with): these may for instance be given as arguments to the time-stepping function, be member functions of an object passed as argument, or just exist as names in the local scope of the time-stepping function. Specifically, the time-stepping function may use functions determining:

> (a) the mass matrix $\mathbf{M}(\mathbf{q})$ at a given configuration. Algorithms for computing the mass matrix and its inverse may be described in Roy Featherstone in "Rigid Body Dynamics Algorithms" Springer, 2008 (hereinafter "Featherstone et al. (2008)"), and by Justin Carpentier in "Analytical Inverse of the Joint Space Inertia Matrix" Rapport LAAS n° 18125, 2018, available on the Internet at hal.laas.fr/hal-01790934v2, which are both incorporated herein in their entireties;
> (b) the total generalized force or fictitious force $f(t, \boldsymbol{q}, \dot{\boldsymbol{q}})$ acting on the system, such as Coriolis, centrifugal, gravitational and external control forces; and
> (c) the set of indices of active constraints $J(\boldsymbol{q})$, which corresponds to the set of pairs of points or surfaces that touch or penetrate at a given configuration, or more generally, to the indices of some constraint functions that take a non-positive value at that configuration.

Moreover, for each active constraint $j \in J(\boldsymbol{q})$, the time-stepping function depicted in Figure 2 may use one or more functions that determine:

> (a) the generalized normal direction $n_j^*(\boldsymbol{q})$ ;
> (b) Jacobians $\boldsymbol{H}_{n,j}(\boldsymbol{q})$ and $\boldsymbol{H}_{t,j}(\boldsymbol{q})$ for the normal and tangential positions, respectively, of contact points (situations involving area contacts are described below); and
> (c) the restitution coefficient $e_j$ and friction coefficient $\mu_j$.

The restitution coefficient $e_j$ and the friction coefficient $\mu_j$ may be fixed for a given contact point, but they may reasonably be determined as functions of position and of velocity.

Further, the time-stepping function depicted in Figure 2 may use linear algebra functions, such as for inverting and taking square roots of matrices; and convex optimization functions, such as for solving quadratic programs and second-order cone programs.

Referring again to the time-stepping function depicted in Figure 2, the following are received as input by the one or more processors or one or more modules at 102: (a) the current time t; (b) the current generalized position $\mathbf{q_t}$; (c) the current generalized velocity $\dot{\mathbf{q}}_\mathbf{t}$; and (d) a positive number h giving the duration of the time step (or time-step duration). In various implementations, the generalized position and velocity may be represented as arrays of common dimension $n$, although it may be advantageous to use quaternion representations for rotations, in which the dimension of the position is larger than that of the velocity. In various implementations, the positions and velocities may be represented as multi-dimensional arrays; for example, when using a GPU (Graphics Processing Unit) and training a reinforcement learning system, and processing several positions and velocities is performed in parallel.

At 104 of the time-stepping function depicted in Figure 2, the one or more processors or one or more modules compute midpoint values. More specifically at 104, in a two-dimensional world, the midpoint generalized position $\boldsymbol{q}_m$ at time $t_m = t + h/2$ (see Charles et al. (2018)) may be estimated by computing:

$$\boldsymbol{q}_m \leftarrow \boldsymbol{q}_t + \frac{h}{2}\dot{\boldsymbol{q}}_t,$$

for the corresponding midpoint mass matrix $M_m$, midpoint force $f_m$ and midpoint set of active constraints $J_m$, respectively:

$$M_m \leftarrow M(q_m), \quad f_m \leftarrow f(t_m, q_m, \dot{q}_t), \quad J_m \leftarrow J(q_m).$$

More generally, approximate values may be computed for the midpoint generalized position $q_m$ at time $t_m = t + h/2$ where midpoint values are computed by computing:

$$\dot{q}_t \quad q_m \leftarrow q_t + \frac{h}{2} K(q_t)\dot{q}_t,$$

where $K$ is a matrix-valued function of generalized position. For instance, if the generalized position $q$ is given by Euler parameters (unit quaternions) then an appropriate choice of matrix function $K$ is given in equation 4.13 of Featherstone et al. (2008).

At 106 of the time-stepping function depicted in Figure 2, the following are computed by the one or more processors or one or more modules for each active constraint $j \in J_m$:

(a) the corresponding normal direction and friction cone Jacobians are computed, respectively, as follows:

$$n_{j,m}^* \leftarrow n_j^*(q_m), \qquad H_{n,j,m} \leftarrow H_{n,j}(q_m), \ H_{t,j,m} \leftarrow H_{t,j}(q_m);$$

and

(b) the corresponding restitution coefficient $e_j$ and friction coefficient $\mu_j$ are computed.

At 108 of the time-stepping function depicted in Figure 2, the free velocity is computed by the one or more processors or one or more modules using the approximation $\dot{q}_f$, which is the generalized velocity that would be obtained at the time $t + h$ if there were no active contacts:

$$\dot{q}_f \leftarrow \dot{q}_t + h M_m^{-1} f_m.$$

At 110 of the time-stepping function depicted in Figure 2, if the free velocity is admissible in the sense that the inequality $n_{j,m}^{*\top} \dot{q}_f \geq 0$ holds for all $j$ in $J_m$, then the normal reaction impulse $r_n$ to be solved for at 112 will be zero, therefore the method continues at 116 otherwise the method continues at 112.

At 112 of the time-stepping function depicted in Figure 2, a normal reaction impulse $r_n$ is computed. More specifically at 112, the normal component of the generalized reaction impulse is approximated over the interval $[t, t + h)$, such as using an impact model with the method disclosed by Charles et al. (2018), using the Poisson impact model disclosed by Christoph Glocker, in "On frictionless impact models in rigid-body systems", Philosophical Transactions of the Royal Society of London. Series A: Mathematical, Physical and Engineering Sciences 359.1789 (2001): 2385-2404, which is incorporated herein in its entirety. In various implementations, other models could be applied such as the Newton, Moreau or LZB impact models as disclosed by Ngoc Son Nguyen and Bernard Brogliato, in "Comparisons of multiple-impact laws for multibody systems: Moreau's law, binary impacts, and the LZB approach", Advanced Topics in Nonsmooth Dynamics, Transactions of the European Network for Nonsmooth Dynamics, Springer International Publishing AG, pp.1-45, 2018, 10.1007/978-3-319-75972-2_1 (published on the Internet at hal.inria.fr/hal-01932551/), which is incorporated herein in its entirety.

The Poisson impact model applied at 112 includes or consists of a compression phase, where the impulse is sufficient to just stop any penetrating motion as in a fully inelastic collision, and a decompression phase, for which the impulse associated with contact j is at least a factor $e_j$ larger than the corresponding impulse in the decompression phase. Specifically, for the compression phase the free velocity $\dot{q}_f$ is projected into the space of velocities compatible with the constraints, by solving the quadratic program:

$$\text{minimize} \ \frac{1}{2}\left(u - \dot{q}_f\right)^\top M_m\left(u - \dot{q}_f\right) \ \text{with respect to } u \in \mathbf{R}^n,$$

subject to $\boldsymbol{n}_{j,m}^{*\top}\boldsymbol{u} \geq 0$ for all $j$ in $J_m$.

Let $\Lambda_j^-$ be the Lagrange multiplier associated with constraint $j$ at solution of this quadratic program. The quantity $\Lambda_j^- \boldsymbol{n}_{j,m}^*$ approximates the normal generalized reaction impulse associated with the compression phase for contact $j$ over time interval $[t, t + h)$. For the decompression phase, the following linear complementarity problem is solved for Lagrange multipliers $\Lambda_j^+$ for $j$ in $J_m$:

$$0 \leq b_j + \sum_{k \in J_m} G_{jk}(\Lambda_k^+ + \Lambda_k^-) \perp \Lambda_j^+ - e_j\Lambda_j^- \geq 0$$

where

$$b_j := \boldsymbol{n}_{j,m}^{*\top}\dot{\boldsymbol{q}}_f, \quad G_{jk} := \boldsymbol{n}_{j,m}^{*\top}\boldsymbol{M}_m^{-1}\boldsymbol{n}_{k,m}^*$$

for $j$ and $k$ in $J_m$. Under the reasonable assumptions that the vectors $\left\{\boldsymbol{n}_{k,m}^* : k \in J_m\right\}$ are linearly independent and the mass matrix is symmetric positive definite, this linear complementarity problem has a unique solution, which may be determined by solving the quadratic program:

minimize $\sum_{j \in J_m}\left(b_j + \sum_{k \in J_m} G_{jk}(\Lambda_k^+ + \Lambda_k^-)\right)\left(\Lambda_j^+ - e_j\Lambda_j^-\right)$ with respect to $\Lambda_j^+ \in \mathbf{R}$ for j in $J_m$,

subject to $b_j + \sum_{k \in J_m} G_{jk}(\Lambda_k^+ + \Lambda_k^-) \geq 0$ and $\Lambda_j^+ - e_j\Lambda_j^- \geq 0$ for all $j$ in $J_m$.

Finally, the normal reaction impulse $r_n$ is approximated over interval $[t, t + h)$ by setting

$$r_n \leftarrow \sum_{j \in J_m}\left(\Lambda_j^+ + \Lambda_j^-\right)\boldsymbol{n}_{j,m}^*.$$

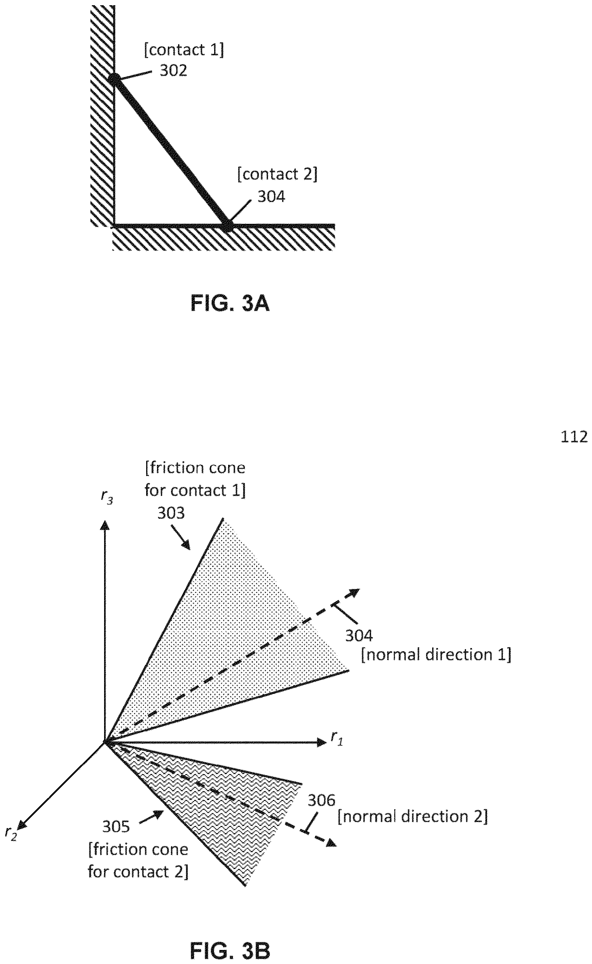

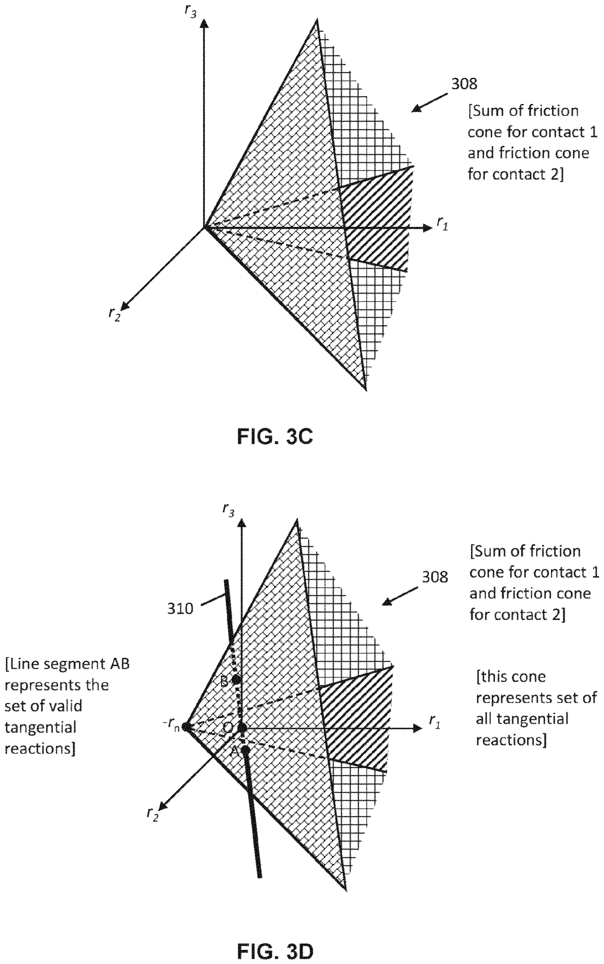

At 114 of the time-stepping function depicted in Figure 2, a tangential reaction impulse is computed by the one or more processors or one or more modules. Figures 3A, 3B, 3C, and 3D depict a conceptual representation of a tangential reaction of two individual contacts.

In Figure 3A, there is represented a rigid rod in a two-dimensional (2D) space with a first individual contact 302 and a second individual contact 304. In Figure 3B there is represented a first friction cone 303 and a second friction cone 305 in a 3D space of generalized reaction forces/impulses with axes $r_1$, $r_2$ and $r_3$, corresponding to individual contacts 302 and 304 shown in Figure 3A, respectively. Friction cones 303 and 305, which represent the forces that may be applied through frictional contacts, have normal directions 304 and 306, respectively. In Figure 3C there is represented the sum 308 of the friction cones 303 and 305 in Figure 3B in the 3D space $r_1r_2r_3$ of generalized reaction forces/impulses.

In Figure 3D, there is represented the sum 308 of the friction cones 303 and 305 minus the generalized normal reaction $r_n$. Further in Figure 3D, point O is the origin of the 3D space $r_1r_2r_3$ of generalized reaction forces/impulses (i.e., the point of zero tangential reaction). The line 310 in Figure 3D is the set of generalized reactions that are orthogonal the generalized normal reaction $r_n$ and such that the inner product with the normal directions 304 and 306 (shown in Figure 3B) are non-positive. Further, line 310 crosses the sum 308 of the friction cones 303 and 305, and passes through point O. It follows that segment AB of line 310 represents the set of valid tangential reactions.

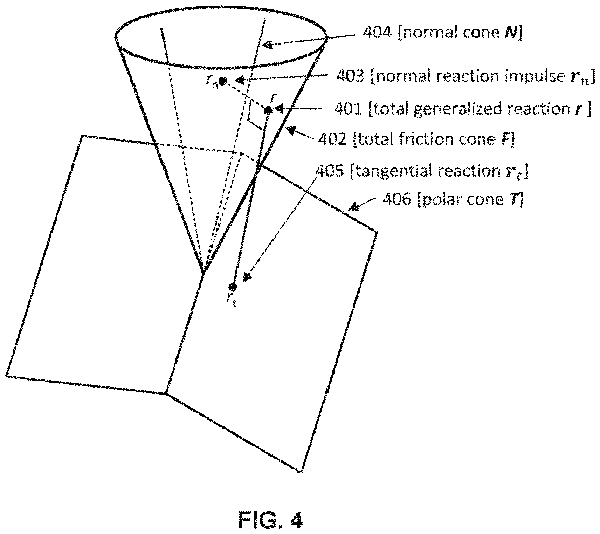

Referring to Figure 4 which further depicts the conceptual representation of a tangential reaction shown in Figures 3A, 3B, 3C and 3D, the total generalized reaction $\boldsymbol{r}$ 401 (i.e., the sum of the normal generalized reaction $r_n$ and

the tangential generalized reaction $r_t$) lies in the total friction cone **F** 402, which is the sum of the friction cones of the individual contacts (e.g., friction cones 303 and 305 of individual contacts 302 and 304, respectively, shown in Figures 3A and 3B). Typically, generalized reactions occupy a high-dimensional space; the space illustrated in Figure 3 is portrayed as if it were 3D space for illustrative purposes only because higher-dimensional space may not be readily diagrammed. Furthermore, the 3D space in Figure 3 does not represent a 3D space of real-world forces used in conventional formulations of Coulomb's law of friction.

With continued reference to Figure 4, the total friction cone **F** 402 contains the normal cone **N** 404 generated by the normal directions of the individual contacts (e.g., normal directions 304 and 306 of friction cones 303 and 305 of individual contacts 302 and 304, respectively, shown in Figures 3A and 3B). The normal cone **N** 404 is represented as a flat "fan", so the polar cone **T** 406 to normal cone **N** 404 is the intersection of half spaces, whose surface includes or consists of two planes denoted by the polar cone **T** 406. By Moreau's theorem about decomposition into cones, any reaction **r** can be written as the sum of the projection $r_t$ of **r** onto polar cone **T** 406 and the projection $r_n$ of **r** onto normal cone **N** 404, and these projections are orthogonal. (Note the projection and orthogonality here are weighted by the inverse mass matrix; they are not the usual Euclidean projection, unless the mass matrix happens to be a multiple of the identity matrix.) In effect, the tangential reaction $r_t$ 405 may be determined by searching over projections of the total friction cone **F** 402 onto the polar cone **T** 406, which are orthogonal to a given normal reaction impulse $r_n$ 403.

Referring again to 114 in Figure 2, a tangential reaction impulse $r_t$ over interval $[t, t + h)$ is computed by the one or more processors or one or more modules. Using a friction cone in the space of generalized forces or impulses for each contact $j \in J_m$, which is the set $F_j$ of generalized forces or impulses of the form (hereinafter "Equation (1)"):

$$H_{t,j,m} w_j + H_{n,j,m} \gamma_j \quad \text{where} \quad \left\| w_j \right\|_2 \leq \mu_j \, \gamma_j,$$

in which a vector $w_j$ is introduced, which is in $\mathbf{R}^2$ for a point contact in a 3D world, and a scalar $\gamma_j$, and in which the inequality says that the pair $(w_j, \gamma_j)$ lie in a circular cone, also known as a Lorentz cone. The sum of the normal reaction impulse $r_n$ and the tangential reaction impulse $r_t$ are constrained to lie in the sum over these friction cones. Equivalently, the tangential generalized reaction is constrained to be a sum with one term from each friction cone, minus the normal generalized reaction (hereinafter "Constraint (1)"):

$$(1)\ r_t = \left( \sum\nolimits_{j \in J_m} H_{t,j,m} w_j + H_{n,j,m} \gamma_j \right) - r_n \quad \text{and} \quad \left\| w_j \right\|_2 \leq \mu_j \, \gamma_j \text{ for } j \text{ in } J_m,$$

where the one term from each friction cone is determined in a friction cone by multiplying a tangential contact Jacobian by a tangential cone-position variable $w$ and adding it to the result of multiplying a normal contact Jacobian by a normal cone-position variable $y$ (which in an example the one term from each friction cone may be determined using the following Python code: Ht@w[-1] + Hn*gamma[-1] in which w and gamma are lists whose elements are of type cvxpy.Variable).

Moreover, the tangential and normal reactions may be "tangential" and "normal" in an appropriate sense. Regarding friction, the "tangential space" may be the subset of the real-world space vector space $\mathbf{R}^3$ that is orthogonal to the real-world direction normal to the contacting surfaces. However, a notion of "tangential" relative to the set of normal generalized reaction vectors may be sought here. As the normal generalized reaction lies in the closed convex cone

$$K := \left\{ \sum_{j \in J_m} \lambda_j \, n_j^* : \ \lambda_j \geq 0 \ \forall j \in J_m \right\},$$

which is not in general a vector space (because only non-negative linear combinations of the normal directions are allowed), the "appropriate sense" is defined based on Moreau's Decomposition Theorem (see Jean-Jacques Moreau, "Décomposition orthogonale d'un espace hilbertien selon deux cônes mutuellement polaires", Comptes rendus hebdomadaires des séances de l'Académie des sciences 255 (1962): 238-240, which is incorporated herein in its entirety (hereinafter "Moreau (1962)"), as is now explained. Given closed convex cone $C$, the polar cone $C°$ includes or consists of all vectors that have a non-positive inner product with all vectors in the closed convex cone $C$. Given a closed convex cone $C$ in a real Hilbert space $H$, Moreau's Decomposition Theorem says that any vector in $N$ can be written uniquely as the sum of a vector in cone $C$ and a vector in the polar cone $C°$, in such a way that these vectors are orthogonal. Thus, the tangential generalized reaction is constrained to be orthogonal to the normal generalized reaction and have a non-positive inner product with each contact's normal direction (so that it lies in the polar cone $K°$), using the appropriate inner product for generalized reactions, which involves the inverse mass matrix (hereinafter "Constraint (2)"):

$$(2)\ \boldsymbol{r}_n^\top \boldsymbol{M}_m^{-1}\, \boldsymbol{r}_t = 0 \quad \text{and} \quad \boldsymbol{n}_{j,m}^{*\top} \boldsymbol{M}_m^{-1}\, \boldsymbol{r}_t \le 0 \text{ for } j \text{ in } J_m.$$

The use of Moreau's Decomposition Theorem may have been used to define the notion of "tangential generalized reaction due to friction" without referring to Moreau (1962) in Alexandre Charles, "Dynamique des systèmes de solides rigides avec impacts et frottement", Dissertation, Aix-Marseille, 2013, which use differs from the case of multiple contacts set forth herein as that use allows the tangential reaction to range only over a slice of the full friction cone given by Constraint (1).

Finally at 114, the one or more processors or one or more modules select from among the tangential reactions compatible with Constraint (1) and Constraint (2). This is done in such a way as to maximize the energy dissipated by the tangential reaction over time interval [t, t + h), or equivalently minimizing the energy at (or just a predetermined period before) the final time t + h. The idea of using a principle of maximum dissipation to select among frictional reactions is described in Jean-Jacques Moreau, "Application of convex analysis to some problems of dry friction", Trends in applications of pure mathematics to mechanics, Pitman, 1977, which is incorporated herein in its entirety. Advantageously, a unique solution may be found for the tangential generalized reaction by maximizing the energy dissipated over an interval of duration h > 0 because this involves the minimization of a strictly convex function. To derive the energy at the final time, the integral of the equation of motion over the time interval can be approximated by

$$\boldsymbol{M}_m(\dot{\boldsymbol{q}}_{t+h} - \dot{\boldsymbol{q}}_t) = h\,\boldsymbol{f}_m + \boldsymbol{r}_n + \boldsymbol{r}_t.$$

Recalling the definition of the free velocity $\dot{\boldsymbol{q}}_f = \dot{\boldsymbol{q}}_t + h\boldsymbol{M}_m^{-1}\boldsymbol{f}_m$, it follows that

$$\boldsymbol{M}_m\dot{\boldsymbol{q}}_{t+h} = \boldsymbol{M}_m\dot{\boldsymbol{q}}_f + \boldsymbol{r}_n + \boldsymbol{r}_t.$$

Thus, the energy at time t + h may be approximated by

$$\frac{1}{2}\,\dot{\boldsymbol{q}}_{t+h}^\top \boldsymbol{M}_m \dot{\boldsymbol{q}}_{t+h} = \frac{1}{2}\left(\boldsymbol{M}_m\dot{\boldsymbol{q}}_f + \boldsymbol{r}_n + \boldsymbol{r}_t\right)^\top \boldsymbol{M}_m^{-1}\left(\boldsymbol{M}_m\dot{\boldsymbol{q}}_f + \boldsymbol{r}_n + \boldsymbol{r}_t\right).$$

When constraint (2) holds, so that $\boldsymbol{r}_n$ and $\boldsymbol{r}_t$ are orthogonal, minimizing this expression with respect to $\boldsymbol{r}_t$ is the same as minimizing

$$\left(\boldsymbol{M}_m\dot{\boldsymbol{q}}_f + \boldsymbol{r}_t\right)^\top \boldsymbol{M}_m^{-1}\left(\boldsymbol{M}_m\dot{\boldsymbol{q}}_f + \boldsymbol{r}_t\right).$$

Moreover, minimizing a non-negative expression is the same as minimizing its square root. Therefore, the tangential reaction can be computed by solving the following mathematical program (hereinafter "Equation (3)"):

(3) minimize $\left\|\boldsymbol{M}_m^{-1/2}\left(\boldsymbol{M}_m\dot{\boldsymbol{q}}_f + \boldsymbol{r}_t\right)\right\|_2$ with respect to $\boldsymbol{r}_t,\ \boldsymbol{w}_j,\ \gamma_j$ for j in $J_m$ subject to Constraint (1) and Constraint (2) in which $\boldsymbol{M}_m^{-1/2}$ is the matrix square root of $\boldsymbol{M}_m^{-1}$. This type of program may be referred to as a second-order cone program, and may be solved, for example, as described in the CVXPY library (see for example S. Diamond and S. Boyd, in "CVXPY: A Python-embedded modeling language for convex optimization", Journal of Machine Learning Research, 2016, and Akshay Agrawal, Robin Verschueren, Steven Diamond, and Stephen Boyd, "A rewriting system for convex optimization problems", Journal of Control and Decision 5, no. 1 (2018): 42-60, which are incorporated herein in its entirety (hereinafter "Agrawal *et al.* (2018)")). To apply these algorithms, Equation (3) may be re-written in canonical form, in which the objective is a linear function. Using results disclosed by M. S. Lobo, L. Vandenberghe, S. Boyd, & H. Lebret, in "Second-order cone programming" Linear algebra and Applications, v. 284, pp. 193-228, 1998, which is incorporated herein in its entirety (hereinafter "Lobo *et al.* (1998)", one more scalar variable s and one more cone constraint are introduced (hereinafter "Equation (4)"):

$$(4)\ \left\| M_m^{-1/2}\left(M_m \dot{q}_f + r_t\right)\right\|_2 \leq s,$$

and then one the second-order cone program can be written in canonical form as

(5) minimize $s$ with respect to $s, r_t, w_j, \gamma_j$ for $j$ in $J_m$ subject to (1), (2) and (4). Equation (5) is thus a summary of a method of finding the tangential reaction impulse $r_t$.

At 116 of the time-stepping function depicted in Figure 2, the end-of-step generalized velocity and the end-of-step generalized position at (or just before) time $t + h$ is approximated by

$$\dot{q}_{t+h} \leftarrow \dot{q}_f + M_m^{-1}(r_n + r_t) \quad \text{and} \quad q_{t+h} \leftarrow q_m + \frac{h}{2}\dot{q}_{t+h}.$$

At 118 of the time-stepping function depicted in Figure 2, the generalized velocity and position computed at 116 are output by the one or more processors or one or more modules, which output may be used in applications involving objects with multiple contacts as described herein. More specifically at 118, the time-stepping function depicted in Figure 2 returns: (a) the time $t + h$ after the step; (b) an approximation of the generalized position $q_{t+h}$ at that time; and (c) an approximation of the generalized velocity $\dot{q}_{t+h}$ at that time (or more strictly, "just before" that time, noting that there might be an impact at time $t + h$).

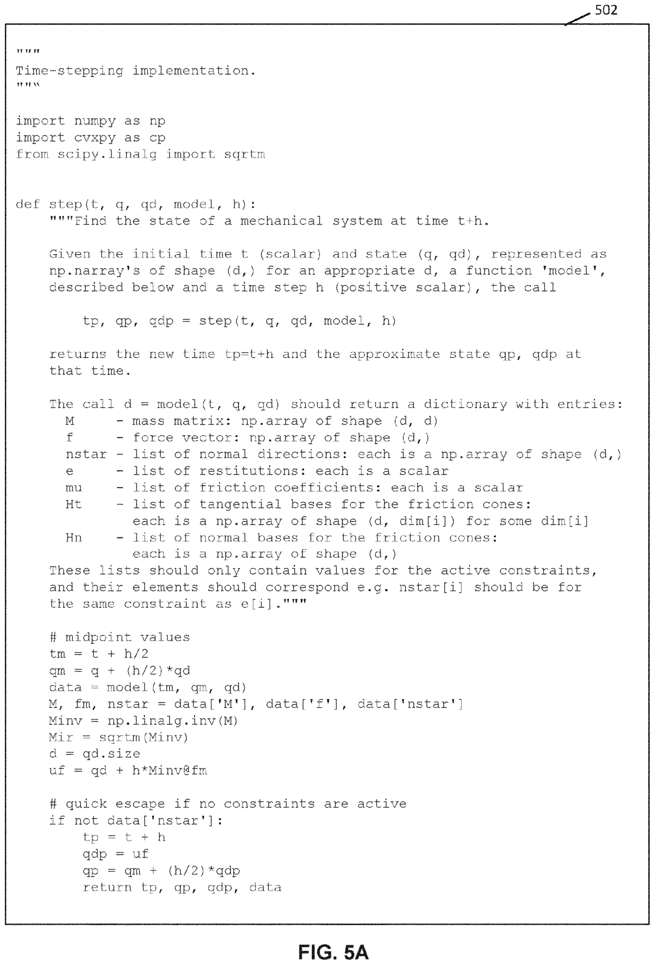

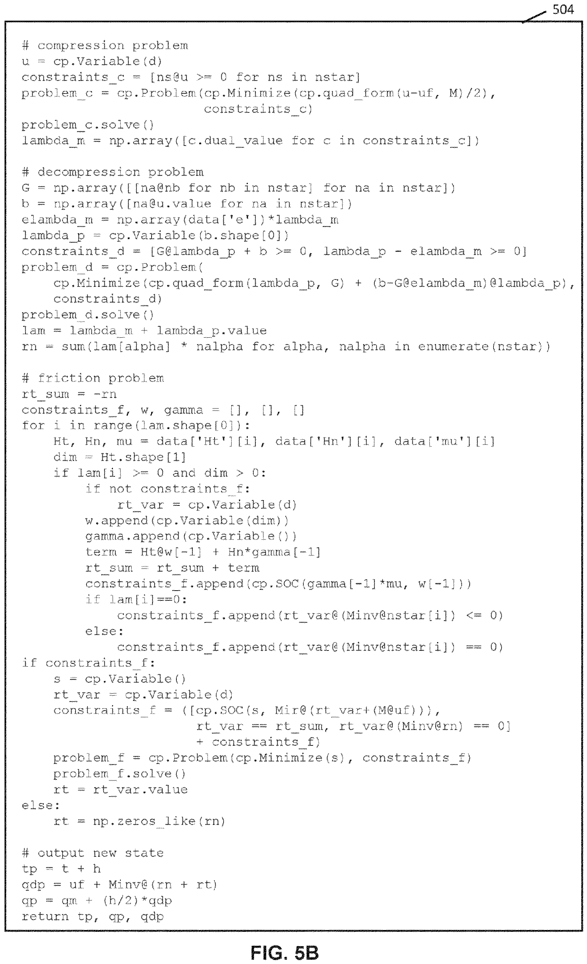

Figure 5A and Figure 5B includes an implementation in pseudo-code 502 and 504, respectively, of the example method for determining the motion of objects in Figure 2. The import CVXPY in 502 used to solve the quadratic programs and second-order cone programs embodiments of which are described above. Also, np.array in 502 may refer to a data structure used to store and manipulate multidimensional arrays, such as disclosed at numpy.org/doc/stable/reference/generated/numpy.array.html.

In various implementations, an initialization occurs as part of 114 in Figure 2 as follows (hereinafter "Initialization Process"). Given Equation (1), which provides a set of generalized forces $F_j$ for friction cones for contact index $j$ in the set of active contacts $J$, the following sequence of steps may be applied to any convex cone $F_j$ to give another convex cone $\tilde{F}_j$. In this alternate embodiment, the method set forth in 114 in Figure 2 may be applied by replacing cones $F_j$ with cones $\tilde{F}_j$ with the following three-step process:

1. Define a shifted cross section $C_j^*$ of convex cone $F_j$ as:

$$C_j^* := \left\{ f - n_j^* : f \in F_j, \left(f - n_j^*\right)^\top M^{-1} n_j^* = 0 \right\},$$

where $f$ is a generalized force or impulse and $M^{-1}$ is the inverse mass matrix, which if the set $C_j^*$ is constructed (i) for *Determining Object Motion by Computing Reaction Impulse* as set forth in this Section 2, inverse mass matrix $M^{-1}$ may be set to $M_m^{-1}$ for use in time-stepping, or (ii) for *Determining Object Acceleration by Computing Reaction Force* as set forth in Section 6, inverse mass $M^{-1}$ may be set matrix to $M^{-1}(q)$ where $q$ is the configuration at the time acceleration is to be computed.

2. Find a projection matrix $P^*$ which maps generalized force $f$ to a projected generalized force $P^* f$ that is orthogonal to each of the normal directions $n_j^*$ for $j \in J$, while minimizing the difference:

$$\left(f - P^* f\right)^\top M^{-1} \left(f - P^* f\right).$$

Further, let $A$ denote the matrix whose rows are $n_j^{*\top}$ for $j \in J$ (i.e., it is a $k \times d$ matrix if $k$ is the cardinality of $J$ and d is the dimension of $n_j^*$ ), then an explicit expression for the projection matrix $P^*$ is:

$$P^* = I - A^\top (A\,M^{-1}\,A^\top)^{-1}\,A\,M^{-1}.$$

3. Finally, define the closed convex cone as (hereinafter "Equation (2)"):

$$\tilde{F}_j := \left\{ x\left(P^* c + n_j^*\right) \mid x \geq 0, c \in C_j^* \right\}.$$

Explicitly, the Initialization Process' alternative friction cones $\tilde{F}_j$ may be given by:

$$\tilde{F}_j = \left\{ P^* H_{t,j} w + P^* H_{n,j}\gamma + x\,n_j^* \mid x \geq 0, \|w\|_2 \leq \mu_j \gamma, \left(H_{t,j} w + H_{n,j}\gamma - x\,n_j^*\right)^\top M^{-1} n_j^* = 0 \right\}.$$

Those skilled in the art will appreciate that friction cones need not have circular or elliptical cross sections. The above three-step process extends naturally when $F_j$ is any convex cone. However, if using other types of cones in the disclosed methods, a more general optimization method may be needed than second-order cone programming.

### 3. Alternative Embodiments

### 3.A Formulation of Constraints

In the methods of the present disclosure, the normal reaction $r_n$ is of the form $\sum_{j \in J_m} \lambda_j\,n_j^*$ for some multipliers $\lambda_j$ which are non-negative (for instance, $\lambda_j = \Lambda_j^+ + \Lambda_j^-$ for the Poisson impact model described above). For such normal reactions, Constraint (2) above can be rewritten as:

$$(2') \quad (\; n_{j,m}^{*\top} M_m^{-1}\,r_t = 0 \text{ if } \lambda_j > 0 \quad \text{and} \quad n_{j,m}^{*\top} M_m^{-1}\,r_t \leq 0 \text{ if } \lambda_j = 0 \;) \quad \text{for } j \text{ in } J_m.$$

Also, various quantities may be multiplied by powers of mass matrix $M_m$. For instance, the variable $v_t := M_m^{-1}\,r_t$, may also be solved for, which may be used to solve the following second-order cone program for variables $v_t$, $w_j$, $\gamma_j$ for $j$ in $J_m$:

minimize $\left\| M_m^{1/2}\left(\dot{q}_f + v_t\right) \right\|_2$ subject to $M_m v_t = (\sum_{j \in J_m} H_{t,j,m} w_j + H_{n,j,m}\gamma_j) - r_n$ where $\|w_j\|_2 \leq \mu_j\,\gamma_j$ for $j$ in $J_m$ and

$$(\; n_{j,m}^{*\top} v_t = 0 \text{ if } \lambda_j > 0 \quad \text{and} \quad n_{j,m}^{*\top} v_t \leq 0 \text{ if } \lambda_j = 0 \;) \quad \text{for } j \text{ in } J_m.$$

### 3.B Numerical Optimization

In an embodiment, the time-stepping function of the present disclosure is implemented using quadratic programming and second-order cone programming functions from the CVXPY library, but the present application is also applicable to other functions. Mechanical simulators may use non-linear Gauss-Seidel algorithms (see Charles et al. (2018)) and per contact iteration methods (see Hwangbo, J., Lee, J., & Hutter, M., "Per-contact iteration method for solving contact dynamics", in IEEE Robotics and Automation Letters, 3(2), 895-902, 2018, which is incorporated herein in its entirety), and both may be adapted to the optimization problems encountered herein. Second-order cones may be approximated by linear cones and use methods for linear programming or linear complementarity (see: Stewart, David E. "Rigid-body dynamics with friction and impact." SIAM Review 42.1 (2000): 3-39; and M. Anitescu and F. Potra, "Formulating dynamic multi-rigid-body contact problems with friction as solvable linear complementarity problems," Nonlinear Dynamics, vol. 14, no. 3, pp. 231-247, Nov. 1997, which are incorporated herein in its entirety).

### 3.C Numerical integration

Two families of methods for numerical integration of mechanical systems that may undergo impacts are: (i) event-driven or event-tracking methods, which use high-order integration methods in times of smooth motion and accurately approximate the times of non-smooth motion (see Chapter 8 of Acary, Vincent, and Bernard Brogliato, "Numerical methods for nonsmooth dynamical systems: applications in mechanics and electronics", Springer Science & Business Media, 2008, which is incorporated herein in its entirety (hereinafter "Acary *et al.* (2008)")); and (ii) time-stepping or event-capturing methods, which can cope with multiple impacts in a single time step (see Chapter 10 of Acary *et al.* (2008)), but which may only be accurate to low order, as they do not try to determine event times. Non-smooth generalized-alpha methods may be used (e.g., see Galvez, Javier, Federico J. Cavalieri, Alejandro Cosimo, Olivier Brüls, and Alberto Cardona. "A nonsmooth frictional contact formulation for multibody system dynamics." International Journal for Numerical Methods in Engineering 121, no. 16 (2020): 3584-3609, which is incorporated herein in its entirety), which split the motion into a (non-smooth) impulsive contribution integrated with first-order accuracy, and a smooth contribution integrated with higher-order accuracy. While the present application provides the example of a time-stepping function, the present application (involving determining tangential reactions by summing friction cones, imposing orthogonality to the generalized normal, constraining to the polar cone for the space of normal reactions, and maximizing dissipation) may also be applied in conjunction with other families of integration method.

### 3.D Different Friction Models

The methods of the present application include friction models in which the set of friction forces at a contact is given by a cone that contains the generalized normal direction. The friction force may thus be directionally dependent (e.g., see Bullock, James MR, Patrick Drechsler, and Walter Federle, "Comparison of smooth and hairy attachment pads in insects: friction, adhesion and mechanisms for direction-dependence," Journal of Experimental Biology 211, no. 20 (2008): 3333-3343, which is incorporated herein in its entirety), and it need not be symmetric to 180-degree rotations of the real-world force (in the case of sticking) or velocity (in the case of sliding). Moreover, while the time-stepping function described with reference to Figure 2 may or may not explicitly model any difference between static and kinetic friction (e.g., see p. 118 of Kane, Thomas R., and David A. Levinson. Dynamics, theory and applications. McGraw Hill, 1985 (hereinafter "Kane *et al.* (1985)"), which is incorporated herein in its entirety), nor any dependence of kinetic friction on velocity (e.g., see O.M. Braun and M. Peyrard, "Dependence of kinetic friction on velocity: Master equation approach," Phys. Rev. E 83, 046129, 2011, which is incorporated herein in its entirety), the dependence can be approximated by making the friction coefficient $\mu_j$ of a contact be a function of a contact speed function $v_j(\boldsymbol{q}, \dot{\boldsymbol{q}})$, which may give the real-world relative speed at a point contact. For example, one might set

$$\mu_j = \mu_j^k + (\mu_j^s - \mu_j^k) \exp(-v_j(\boldsymbol{q}_m, \dot{\boldsymbol{q}}_t)^2/k^2)$$

for a suitable constant $k$, in the midpoint values step of the time-stepping function, to model static and kinetic friction coefficients $\mu_j^s$ and $\mu_j^k$ .

### 3.E Differentiating Methods

Several applications benefit from the possibility of differentiating a friction model with respect to various parameters: (i) in optimal control, it is helpful to differentiate the final state with respect to the initial state and control input; (ii) in design, adaptive control and system identification, it is helpful to differentiate the model with respect to lengths and inertia properties of the links of a mechanism; and (iii) in system identification, it is helpful to also differentiate the model with respect to the inertias, lengths, restitutions and friction parameters of objects or surfaces with which a mechanism is interacting, when both the mechanism and objects are parts of a common physical model.

Provided the associated functions (e.g., mass matrix, force, normal directions) of the model are differentiable with respect to the relevant parameters, the outputs of methods of the present disclosure may be differentiated, such as using the chain rule (i.e., how to differentiate composite functions). One aspect of solving for the tangential generalized reaction is to differentiate the solution of a second-order cone program with respect to parameters of that program. General results to take such a derivative are discussed in, for example, Agrawal et al. (2018), and an implementation of these results is available as part of the Python package diffcp available at github.com/cvxgrp/diffcp. Package diffcp may be accessed via the CVXPY library, provided the optimization problem is formulated in a manner that is compatible with disciplined parameterized programming (DPP, as described at cvxpy.org/tutorial/advanced/index.html#disciplined-parametrized-programming). Such a formulation is possible for the second-order cone program (SOCP) at hand.

### 3.F Other Computational Methods

Examples described herein may use one computational approach of what to do in situations where one or more constraints $j$ are active (in the sense that the contacts touch, so that $j \in J(\boldsymbol{q})$), yet the Lagrange multiplier $\lambda_j$ vanishes on the time interval. This may not be considered the most physically satisfying approach, because it may allow such contacts to dissipate power, even though no normal reaction is needed to keep them apart. Another approach may be considered more physically satisfying: (i) the set of active constraints may be replaced with a set that are active and have a positive Lagrange multiplier, in the definition of the friction cone; and (ii) the free velocity is replaced by the tangential component of the free velocity. Specifically, (i) and (ii) amount to:

in Constraint (1) above, replacing the set $J_m$ by the set $\{j \in J_m : \lambda_j > 0\}$; and

in Equation (3) and Equation (4) above, replacing the free velocity $\dot{\boldsymbol{q}}_f$ by its tangential projection, which is the unique

solution $\dot{\boldsymbol{q}}_{ft}$ of minimizing: $\dot{\boldsymbol{q}}_{ft}^{\top} \boldsymbol{M}_m \dot{\boldsymbol{q}}_{ft}$ with respect to $\dot{\boldsymbol{q}}_{ft}$ and the real numbers $\kappa_j$ for $j \in J_m$

subject to $\dot{\boldsymbol{q}}_{ft} = \dot{\boldsymbol{q}}_f - \sum_{j \in J_m} \kappa_j \boldsymbol{M}_m^{-1} \boldsymbol{n}_{j,m}^*$ .

### 4. Applications

### 4.A System identification

The present application has many applications/uses. For example, the present application may be used for system identification (i.e., methods for building models of systems based on observed data of the systems). One approach is to use differentiable friction simulations for system identification, such as described in Le Lidec, Quentin, Igor Kalevatykh, Ivan Laptev, Cordelia Schmid, and Justin Carpentier, "Differentiable simulation for physical system identification," IEEE Robotics and Automation Letters 6, no. 2, pp. 3413-3420, 2021, which is incorporated herein in its entirety (hereinafter "Le Lidec et al. (2021)"). As detailed in Section IV.B of Le Lidec et al. (2021), given one or more trajectories, derived from sensors on a robot and/or inferred from one or more videos, a loss function measures the difference between the predicted and measured trajectory. Estimates of the system parameters to be identified are adjusted (e.g., by a training module) based on minimizing the loss. While Le Lidec et al. (2021) describes using the mean-squared error in the state as a loss, one may beneficially use loss functions that account for dependence between measurement errors and heavy-tailed behavior of such errors. Le Lidec et al. (2021) describes how to attempt to identify a single scalar friction parameter for a box, and indicates that the described approach is also applicable to more complex scenarios involving multiple unknown parameters of walking robots. Le Lidec et al. (2021) make predictions using a time-stepping function, given by an iterative application of equation (5) in Le Lidec et al. (2021), which is based on Coulomb friction.

The time-stepping process used in Le Lidec et al. (2021) can be replaced with a time-stepping function based on the function set forth in Figure 2 (noting that methods of the present disclosure are also differentiable with respect to system parameters, if the associated model functions and parameters are differentiable). Advantageously unlike the methods set forth in Le Lidec et al. (2021), the methods of the present disclosure are guaranteed to converge, and operate by first solving for normal reactions, then solving for tangential reactions, rather than requiring a costly process that alternates between solving for normal and tangential reactions. In addition, the methods of the present disclosure may be implemented for area contacts in addition to point contacts.

### 4.B Trajectory Optimization and Model Predictive Control

Concepts of the present application may be used with techniques for trajectory optimization and identification of linear feedback laws, in the presence of frictional contact. Two of such techniques are the two differential dynamic programming methods described in Budhiraja, Rohan, Justin Carpentier, Carlos Mastalli, and Nicolas Mansard, Differential dynamic programming for multi-phase rigid contact dynamics, In IEEE-RAS 18th International Conference on Humanoid Robots (Humanoids), pp. 1-9. 2018 (hereinafter "Budhiraja et al. (2018)"), which is incorporated herein in its entirety. Differential dynamic programming (DDP) designs a sequence of states and control inputs that minimizes the sum over time of a cost function, which is a function of state and control at each time, and which satisfies a dynamic programming equation (such as that in equation 2 of Budhiraja et al. (2018)). Given an initial guess for an optimal trajectory, DDP uses a local quadratic expansion of the state-action cost-to-go function and the state-value function (see equations 5, 6 and 8 of Budhiraja *et al.* (2018)). The DDP algorithm iteratively improves on the initial guess by a sequence of alternating backward and forward passes. In a backward pass of DDP, the local quadratic expansion is propagated backwards in time and a time-varying linear feedback control is derived by solving quadratic optimization problems (see equation 7 of Budhiraja et al. (2018)). In a forward pass of DDP, specific values of the control input are derived from the feedback law, and the state sequence is updated using a model of the full nonlinear dynamics (see equation 9 of Budhiraja et al. (2018)).

Concepts of the present application may be deployed in an application of DDP by letting the state dynamics function, *f* described in Budhiraja et al. (2018), be given by the time-stepping function of present application. The function *f* can provide the next state given the current state and control input, and that it is a twice differentiable function of those inputs (so that equation 6 of Budhiraja et al. (2018) can be applied). In another example, an extended version of DDP may be used in which the cost functions can depend on the normal and tangential reactions (as in equation 14 of Budhiraja et al. (2018)), for instance to model the costs of wear due to friction and damage due to repeated impacts or large normal reactions. To do this output may be the next state with function *f* and also returned may be the values of the reactions, which is the function *g* in equation 13 of Budhiraja et al. (2018). Indeed these reactions are readily available as the variables $r_n$ and $r_t$ in the time-stepping function discussed herein. It is necessary to differentiate *g,* which is possible as described herein. Given such functions, equation 15 of Budhiraja et al. (2018) shows how to calculate the local quadratic expansion of the state-action cost-to-go function, which are then inserted in the algorithm's backward iterations, no change being required to the forward iterations, which only make use of the methods disclosed herein via the dynamics function *f.*

In model predictive control (MPC), one is given a dynamic model of a process, a cost function over some time horizon and some constraints on the control or system state; and as new state information is received, one MPC optimizes the future control inputs to optimize the cost function over the time horizon from the current state. Thus, MPC can be seen as repeatedly solving a trajectory optimization problem at rates fast enough to execute the results in real time (e.g., see Neunert, Michael, Markus Stäuble, Markus Giftthaler, Carmine D. Bellicoso, Jan Carius, Christian Gehring, Marco Hutter, and Jonas Buchli, Whole-body nonlinear model predictive control through contacts for quadrupeds, IEEE Robotics and Automation Letters 3, no. 3 (2018): 1458-1465, which is incorporated herein in its entirety), and the method disclosed hereunder can be deployed for instance, as described herein.

## 4.C Reinforcement Learning of Control Policies

Concepts of the present application may be used with reinforcement learning (RL) algorithms to learn policies for the control of mechanical systems with frictional contacts. One way to deploy methods disclosed herein in such an RL system would be to replace the state transition function in the simulator used for RL training, with the time-stepping function depicted in Figure 2. For instance, one may directly replace the RaiSim simulator used in Lee et al. (see Lee, Joonho, Jemin Hwangbo, Lorenz Wellhausen, Vladlen Koltun, and Marco Hutter, Learning quadrupedal locomotion over challenging terrain, Science Robotics 5, no. 47, 2020, which is incorporated herein in its entirety) to learn policies for control of quadrupeds over challenging terrain, with the time-stepping of the present disclosure; or one may directly replace the PyBullet simulator used in Wu et al. (see Wu, Bohan, Iretiayo Akinola, Jacob Varley, and Peter K. Allen, MAT: Multi-Fingered Adaptive Tactile Grasping via Deep Reinforcement Learning," In Conference on Robot Learning, pp. 142-161. PMLR, 2020, which is incorporated herein in its entirety) to learn policies for multi-fingered grasping, with the time-stepping described herein. While RL procedures may not assume that the derivatives of the transition function are available, the derivatives of the time-stepping function described herein may be used to accelerate the RL procedure, for instance as described in Parag et al. (see Parag, Amit, Sébastien Kleff, Léo Saci, Nicolas Mansard, and Olivier Stasse. "Value learning from trajectory optimization and Sobolev descent: A step toward reinforcement learning with superlinear convergence properties." In 2022 International Conference on Robotics and Automation (ICRA), pp. 01-07. IEEE, 2022, which is incorporated herein in its entirety).

Moreover, such RL algorithms may not only be trained with domain randomization (e.g., of friction parameters) to serve to robustly control a mechanism, but might they might also perform some system identification or adaptation, such as to assist future decision-making. For example, a policy might make use of inputs from an adaption module trained by supervised learning using a simulator based the methods described herein, to predict an embedding of the properties of an environment, given a state-action history, for instance as described in Section IV.A of Kumar et al. (see Kumar, Ashish, Zhongyu Li, Jun Zeng, Deepak Pathak, Koushil Sreenath, and Jitendra Malik. "Adapting rapid motor adaptation for bipedal robots." In 2022 IEEE/RSJ International Conference on Intelligent Robots and Systems (IROS), pp. 1161-1168. IEEE, 2022, which is incorporated herein in its entirety).

## 4.D Design of Mechanical Systems

Concepts of the present application may be used in the design of mechanical systems. For instance, Xu et al. (see Xu, Jie, Tao Chen, Lara Zlokapa, Michael Foshey, Wojciech Matusik, Shinjiro Sueda, and Pulkit Agrawal. "An End-to-End Differentiable Framework for Contact-Aware Robot Design." In Robotics: Science & Systems. 2021, which is incorporated herein in its entirety) propose to simultaneously optimize the physical structure (design) and control inputs of a robot, to minimize a loss function (a process known as co-design or co-optimization). Such applications couple a flexible morphology parameterization with a differentiable simulation of frictional contact, which is based on the ADD simulator (see Geilinger, Moritz, David Hahn, Jonas Zehnder, Moritz Bächer, Bernhard Thomaszewski, and Stelian Coros. "ADD: Analytically differentiable dynamics for multi-body systems with frictional contact." ACM Transactions on Graphics (TOG) vol. 39, no. 6, pp. 1-15, 2020, which is incorporated herein in its entirety). As methods of the present disclosure may also serve as a differentiable physics simulator, it may be directly used in such co-optimization techniques.

## 5. Determining Object Acceleration by Computing Reaction Force

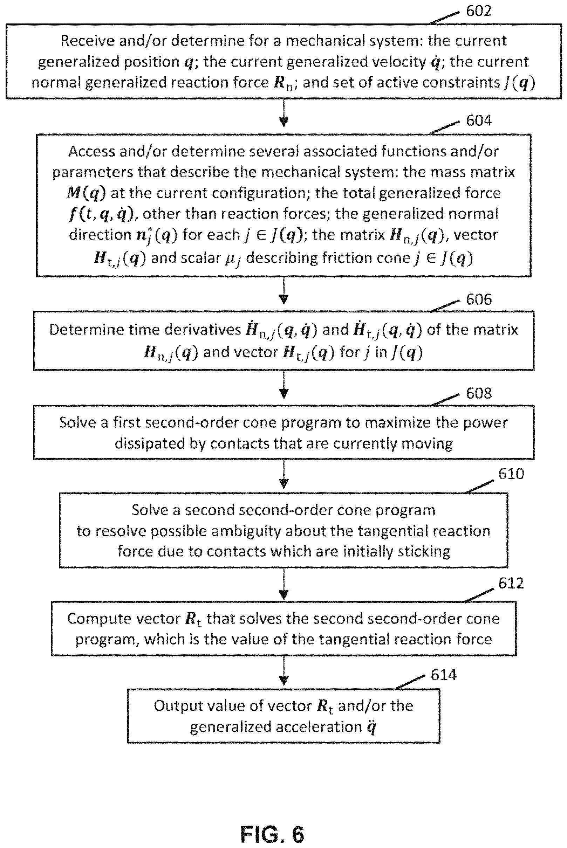

On time intervals on which there are no impacts, the present application may be used to estimate the reaction force (as shown in an embodiment in Figure 6) for a mechanical system rather than the reaction impulse (as shown in an embodiment in Figure 2), so that higher-than-first-order integrators may be used. This is because such integrators can offer a better speed-accuracy trade-off than first-order methods like time-stepping. One example of a higher-order integrator is the Dormand-Prince pair described by Dormand, J. R.; Prince, P. J. in "A family of embedded Runge-Kutta formulae", Journal of Computational and Applied Mathematics, volume 6, number 1, pages 19-26, 1980, which is incorporated herein in its entirety.

Figure 6 is a flow diagram depicting an example method for determining the generalized acceleration of the motion of an object. The flow diagram in Figure 6, which may be performed by the trajectory estimation module 17 in the system 2 in Figure 1, determines a tangential generalized reaction force (instead of a reaction impulse as in the flow diagram in Figure 2). The method in Figure 6 involves solving a sequence of two second-order cone programs, given at 608 and at 610 in Figure 6, which are described in further detail below.

At 602 in Figure 6, the method receives and/or determines: the current time t; the current generalized position (i.e., configuration) $q$, the current generalized velocity $\dot{q}$; the current normal generalized reaction force $R_n$; and set of active constraints $J(q)$.

On time intervals with no impacts, the normal reaction force $R_n$ may be determined by solving a complementary condition between the Lagrange multiplier and the second time derivative of the constraint function, for each constraint such that both the constraint function and its time derivative vanish. Such a condition is given explicitly as the variational inequality in Step 1 of the proof of Proposition 14 disclosed by Patrick Ballard, in "The dynamics of discrete mechanical systems with perfect unilateral constraints," Archive for Rational Mechanics and Analysis, volume 154, 2000, which is incorporated herein in its entirety.

As in the time-stepping function set forth in Figure 2, the method in Figure 6 may at 604 in Figure 6 access and/or determine several associated functions and/or parameters that describe the mechanical system: the mass matrix (inertial matrix) $M(q)$ at the current configuration; the total generalized force $f(t, q, \dot{q})$, other than reaction forces; the generalized normal direction $n_j^*(q)$ for each $j \in J(q)$; as well as the matrix $H_{t,j}(q)$, vector $H_{n,j}(q)$ and scalar $\mu_j$ describing friction cone $F_j$ for $j \in J(q)$.

At 606 in Figure 6, the method determines/computes values for the time derivatives $\dot{H}_{n,j}(q, \dot{q})$ and $\dot{H}_{t,j}(q, \dot{q})$ of the vectors $H_{n,j}(q)$ and matrices $H_{t,j}(q)$ for $j$ in $J(q)$. While these time derivatives may not be needed for the time-stepping function, they may be directly computed from vectors $H_{n,j}(q)$ and matrices $H_{t,j}(q)$ using automatic differentiation or finite differences. As in the time-stepping function set forth in Figure 2, it is assumed that scalar $\mu_j$ is a constant; otherwise, the time derivative $\dot{\mu}_j(q, \dot{q})$ would be required if the friction coefficient $\mu_j(q)$ were a function of the configuration.

Let $M, f, n_j^*$, $H_{n,j}, H_{t,j}, \dot{H}_{n,j}, \dot{H}_{t,j}$ for $j$ in $J$ be the values of these associated functions described above when computed based on the input values $t, q, \dot{q}$.

At 608 in Figure 6, the first second-order cone program is solved that maximizes the power dissipated by contacts that are currently moving (variable) by:

minimizing $\dot{q}^T \tilde{R}_t$ with respect to $\tilde{R}_t, \tilde{w}_j, \tilde{\gamma}_j$ for $j$ in $J$
subject to

$$\widetilde{\pmb{R}}_{\mathrm{t}} = \left(\sum_{j\in J} \pmb{H}_{\mathrm{t},j}\widetilde{\pmb{w}}_j + \pmb{H}_{\mathrm{n},j}\widetilde{\gamma}_j\right) - \pmb{R}_{\mathrm{n}} \quad \text{and} \quad \left\|\widetilde{\pmb{w}}_j\right\|_2 \le \mu_j\,\widetilde{\gamma}_j \text{ for } j \text{ in } J,$$

$$\pmb{R}_{\mathrm{n}}^{\top}\,\pmb{M}^{-1}\,\widetilde{\pmb{R}}_{\mathrm{t}} = 0 \quad \text{and} \quad \pmb{n}_j^{*\top}\,\pmb{M}^{-1}\,\widetilde{\pmb{R}}_{\mathrm{t}} \le 0 \text{ for } j \text{ in } J;$$

where tilde accents have been added to the variables to distinguish them from the analogous variables at 610 in Figure 6. The constraints applied here may be identical to Constraint (1) and Constraint (2) of the time-stepping formulation, but they are applied to reaction forces $\tilde{\pmb{R}}_n$ and $\tilde{\pmb{R}}_{\mathrm{t}}$, rather than reaction impulses. This second-order cone program is already in canonical form, so it can be solved directly by libraries such as CVXPY, as discussed above.

At 610 in Figure 6, the second second-order cone program is solved to resolve possible ambiguity about the tangential generalized reaction force due to contacts which are initially sticking or on the limit between sticking and slipping by:

$$\text{minimizing } \frac{1}{2}(\pmb{f} + \pmb{R}_{\mathrm{t}})^{\top}\pmb{M}^{-1}(\pmb{f} + \pmb{R}_{\mathrm{t}}) + \sum_{j\in J}(\dot{\pmb{H}}_{\mathrm{t},j}\pmb{w}_j + \dot{\pmb{H}}_{\mathrm{n},j}\gamma_j)\,\dot{\pmb{q}}$$

given generalized force $\pmb{f}$, time derivatives $\dot{\pmb{H}}_{\mathrm{t},j}$ and $\dot{\pmb{H}}_{\mathrm{n},j}$ and generalized velocity $\dot{\pmb{q}}$, and with respect to tangential generalized reaction force $\pmb{R}_{\mathrm{t}}$, vector $\pmb{w}_j$ and scalar $\gamma_j$ for $j$ in $J$ subject to the following constraints:

(a)

$$\pmb{R}_{\mathrm{t}} = \left(\sum_{j\in J} \pmb{H}_{\mathrm{t},j}\pmb{w}_j + \pmb{H}_{\mathrm{n},j}\gamma_j\right) - \pmb{R}_n \quad \text{and} \quad \left\|\pmb{w}_j\right\|_2 \le \mu_j\,\gamma_j \text{ for } j \text{ in } J,$$

(b)

$$\pmb{R}_{\mathrm{n}}^{\top}\,\pmb{M}^{-1}\,\pmb{R}_{\mathrm{t}} = 0 \quad \text{and} \quad \pmb{n}_j^{*\top}\,\pmb{M}^{-1}\,\pmb{R}_{\mathrm{t}} \le 0 \text{ for } j \text{ in } J,$$

(c)

$$\dot{\pmb{q}}^{\top}\pmb{R}_{\mathrm{t}} \le \dot{\pmb{q}}^{\top}\widetilde{\pmb{R}}_{\mathrm{t}};$$

where the constraints (a) and (b) above may be identical to Constraint (1) and Constraint (2), respectively, of the time-stepping formulation as applied to a normal generalized reaction force $\pmb{R}_n$ and a tangential generalized reaction force $\pmb{R}_{\mathrm{t}}$. The additional constraint (c) above says that the tangential generalized reaction force $\pmb{R}_{\mathrm{t}}$ should dissipate at least as much power as the reaction force $\tilde{\pmb{R}}_{\mathrm{t}}$. Since the reaction force $\tilde{\pmb{R}}_{\mathrm{t}}$ solves the first second-order cone program, it already dissipates as much power as possible subject to constraint (a) and constraint (b). Thus, the inequality in the constraint (c) may be replaced by an equality.

The second second-order cone program above can be put in canonical form (e.g., for the CVXPY library) by extending the method described in Lobo et al. (1998). One possible canonical form is:

minimize y + $\sum_{j\in J}(\dot{\pmb{H}}_{\mathrm{t},j}\pmb{w}_j + \dot{\pmb{H}}_{\mathrm{n},j}\gamma_j)\dot{\pmb{q}}$ with respect to y, $\pmb{R}_{\mathrm{t}}$, $\pmb{w}_j$, $\gamma_j$ for $j$ in $J$,
subject to

$$\left\|\begin{pmatrix} \pmb{M}^{-1/2}(\pmb{f} + \pmb{R}_{\mathrm{t}}) \\ y \end{pmatrix}\right\|_2 \le y + 1,$$

$$\pmb{R}_{\mathrm{t}} = \left(\sum_{j\in J} \pmb{H}_{\mathrm{t},j}\pmb{w}_j + \pmb{H}_{\mathrm{n},j}\gamma_j\right) - \pmb{R}_n \quad \text{and} \quad \left\|\pmb{w}_j\right\|_2 \le \mu_j\,\gamma_j \text{ for } j \text{ in } J,$$

$$\pmb{R}_{\mathrm{n}}^{\top}\,\pmb{M}^{-1}\pmb{R}_{\mathrm{t}} = 0 \quad \text{and} \quad \pmb{n}_j^{*\top}\,\pmb{M}^{-1}\,\pmb{R}_{\mathrm{t}} \le 0 \text{ for } j \text{ in } J,$$

$$\dot{q}^{\top} R_{\mathrm{t}} \leq \dot{q}^{\top} \widetilde{R}_{\mathrm{t}},$$

in which are introduced a scalar variable $y$, and a second-order cone constraint on that variable.

At 612 in Figure 6, the vector $R_{\mathrm{t}}$ is computed that solves the second second-order cone program, which is the value of the tangential generalized reaction force (or an estimate thereof if one of the programs is solved inexactly). Depending on the application, the model may output the value of $R_{\mathrm{t}}$. In addition at 612 in Figure 6 in a simulation function, the generalized acceleration $\ddot{q}$ would also be estimated by applying the inverse mass matrix to the sum of the generalized force and generalized reaction forces as follows:

$$\ddot{q} = M^{-1}(f + R_{\mathrm{n}} + R_{\mathrm{t}}).$$

At 614 in Figure 6, depending on the application, either the value of vector $R_{\mathrm{t}}$ and/or the generalized acceleration $\ddot{q}$ is output.

The method for computing the tangential generalized reaction force described above with reference to Figure 6 solves two second-order cone programs, whereas the time-stepping function (with reaction impulse) set forth in Figure 2 may solve only one. To understand this difference, consider the problem of solving for the reaction force as the limit of time-stepping as the interval duration $h$ tends to zero. Now, time-stepping minimizes the end-of-interval energy, and this is equivalent to minimizing the change in squared energy divided by $h$:

$$\Delta := \frac{E_{\mathrm{after}}^2 - E_{\mathrm{before}}^2}{h}.$$

Expression $\Delta$ can be expanded in powers of $h$. The terms of $O(1)$ in such an expansion determine the reaction force for contacts that are currently slipping. In the limit $h \to 0$, expression $\Delta$ is minimized if these $O(1)$ terms alone are minimized, as any terms of $O(h)$ vanish: this is the minimization at 608 in Figure 6. However, minimizing those terms may not in general give a unique value for the reaction due to contacts that are currently sticking or on the limit between sticking and slipping. Rather, for any $h > 0$, the terms of $O(h)$ must also be minimized, and this additional minimization is the second program described above with reference to Figure 6.

In an alternate embodiment, the Initialization Process replacing cones $F_j$ with cones $\widetilde{F}_j$ described above with respect to the computation of a generalized position and velocity may also be applied in the method of Figure 6 with respect to the computation of a generalized acceleration.

In yet another embodiment when using cones $\widetilde{F}_j$, the Initialization Process referred to with respect to Figure 2 (computation of a generalized position and velocity) and Figure 6 (computation of a generalized acceleration) may be streamlined (hereinafter the "Streamlined Embodiment"). By way of illustration but not limitation to computation of generalized acceleration, an implementation of the Streamlined Embodiment is performed in two stages with reference to generalized acceleration. Both stages of this implementation of the Streamlined Embodiment use the projection matrix $P^*$ as defined as part of the Initialization Process, and the transpose of the projection matrix, which is denoted by $P = (P^*)^{\mathrm{T}}$. The second stage also uses the time derivative of $P$ which is denoted by $\dot{P}$. As $P$ is only a function of the configuration $q$, this derivative only depends on $q$ and $\dot{q}$ and it may be readily evaluated by automatic differentiation. Also the real numbers $\lambda_j$ are used for $j \in J$ which satisfy

$$R_{\mathrm{n}} = \sum_{j \in J} \lambda_j n_j^*.$$

These numbers exist and are unique if the normal directions $\left\{ n_j^* \right\}_{j \in J}$ are linearly independent.

In the first stage of the Streamlined Embodiment, a cone program is solved corresponding to maximizing the power dissipated at each constraint $j$ in $J$:

minimize $(P\dot{q})^{\mathrm{T}} \widetilde{R}_j$ with respect to $\widetilde{R}_j, \widetilde{w}_j, \widetilde{\gamma}_j$
subject to

$$\widetilde{R}_j = H_{t,j}\widetilde{w}_j + H_{n,j}\widetilde{\gamma}_j - \lambda_j n_j^* \quad \text{and} \quad \left\|\widetilde{w}_j\right\|_2 \leq \mu_j \, \widetilde{\gamma}_j,$$

$$n_j^{*\top} M^{-1} \widetilde{R}_j = 0;$$

The tangential reaction resulting from the first stage is then given by

$$\widetilde{R}_t = P^* \sum_{j \in J} \widetilde{R}_j.$$

In the second stage of the Streamlined Embodiment a second second-order cone program is solved to resolve possible ambiguity about the tangential generalized reaction force due to contacts which are initially sticking or on the limit between sticking and slipping by:

$$\text{minimizing } \frac{1}{2}(f + P^*\overline{R})^\top M^{-1}(f + P^*\overline{R}) + \left(\sum_{j \in J}\dot{H}_{t,j}w_j + \dot{H}_{n,j}\gamma_j\right)^\top P\dot{q} + \overline{R}^\top P\dot{q}$$

with respect to vector $\overline{R}$, vector $w_j$ and scalar $\gamma_j$ for $j$ in $J$, subject to the following constraints:

(a)

$$\overline{R} = \left(\sum_{j \in J} H_{t,j}w_j + H_{n,j}\gamma_j\right) - R_n \quad \text{and} \quad \left\|w_j\right\|_2 \leq \mu_j\gamma_j \text{ for } j \text{ in } J,$$

(b)

$$n_j^{*\top} M^{-1}\left(H_{t,j}w_j + H_{n,j}\gamma_j - \lambda_j n_j^*\right) = 0 \text{ for } j \text{ in } J,$$

(c) $(P\dot{q})^\top \overline{R} \leq (P\dot{q})^\top \widetilde{R}_t$ where $\widetilde{R}_t$ is the solution to the first cone program.

The tangential reaction resulting from the second stage is given by

$$R_t = P^*\overline{R}.$$

**impacts at the start of the interval.** The method for computing the tangential generalized reaction force described above with reference to Figure 6 may assume that there were no impacts on the time interval at hand. However, it is possible to address both normal and tangential impacts at the start of an interval of integration. One method for doing so is to first apply the time-stepping function, with the duration of the time step set to zero. Specifically, if the state at the start of the interval is t, q, qd and step denotes the time-stepping function shown in Figure 5A, then the call:
tp, qp, qdp, data = step (t, q, qd, model, 0)
returns a value qdp for the generalized velocity, for which any normal and tangential impacts have both been resolved. Thus, the state t, q, qdp may be fed directly into the method for computing the tangential generalized reaction force described above with reference to Figure 6.

## 6. Overlaying Methods for Determining Object Motion and Acceleration

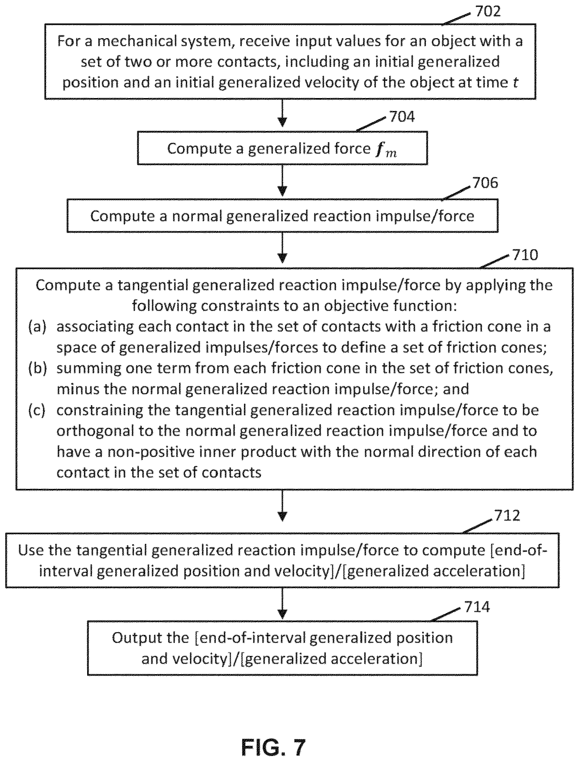

Figure 7 sets forth a flow diagram overlaying the methods for determining object motion by computing the tangential generalized reaction impulse and tangential generalized reaction force set forth in Figures 2 and 6, respectively, for a mechanical system with an object having a set of two or more contacts. FIG. 7 may be performed by one or more modules or one or more processors, such as the module 17 of FIG. 2.
At 702, input values are received in the case of the reaction impulse (i.e., the embodiment set forth in Figure 2) and the reaction force (i.e., the embodiment set forth in Figure 6), which input values include an initial generalized position $q_t$ and an initial generalized velocity $\dot{q}_t$ of the object at time $t$.

At 704, a generalized force $f_m$ is computed, which is a summary of all forces acting on the system other than forces due to the contacts, and in the case of the reaction impulse is used to define energy over the interval, and which in the case of the reaction force is used to define an objective for a second-order cone program that accounts for contacts associated with zero relative velocity at time $t$ (e.g., as computed at 610 in Figure 6). At 706, in the case of the reaction impulse, a normal generalized reaction impulse is computed, and in the case of the reaction force, a normal generalized reaction force is computed.

At 710, a tangential generalized reaction impulse/force (i.e., for each respectively) is computed by applying the following constraints to an objective function, in the case of reaction impulse and force, respectively, that minimizes energy over the interval (where in one embodiment the objective function corresponding to minimizing energy over the interval is given by $\left\| M_m^{-1/2}\left(M_m \dot{q}_f + r_t\right)\right\|_2$ (see Equation (3) above)) and that is used to define power dissipated by friction (where in one embodiment the power dissipated by friction is given by minus the scalar product of the tangential generalized reaction force $R_t$ and the initial generalized velocity $\dot{q}_t$): (a) associating each contact in the set of contacts with a friction cone in a space of generalized impulses/forces to define a set of friction cones; (b) summing one term from each friction cone in the set of friction cones, minus the normal generalized reaction impulse/force; and (c) constraining the tangential generalized reaction impulse/force to be orthogonal to the normal generalized reaction impulse/force and to have a non-positive inner product with the normal direction of each contact in the set of contacts.

The constraint at 710(c) may be automatically satisfied in the case of the Streamlined Embodiment because the projection matrix $P^*$ is defined as the projection into a subspace where the constrains hold with equality. More specifically, constraint at 710(c) may be automatically satisfied depending on properties of friction cones in the set of friction cones, such as when the properties of the friction cones in the set of friction satisfy Equation (2).

At 712, the tangential generalized reaction impulse is used to compute an end-of-interval generalized position and velocity, or the tangential generalized reaction force is used to compute a generalized acceleration, which are output at 714 for use by/for an application/use .

## 7. Advantages

7.1 Existence of Solution. Unlike existing approaches, there is always a solution to the constraints imposed in the approach disclosed herein. Setting the tangential generalized reaction equal to zero satisfies the constraints of the approach disclosed herein.

7.2 Uniqueness. Other approaches are known to have multiple solutions. In contrast, the approach disclosed herein gives a unique solution for the tangential generalized reaction (when using an embodiment with the maximum dissipation principle, because it involves the minimization of a strictly convex function).

7.3 Energy consistency. Other approaches may predict gains in kinetic energy during frictional impacts, even for a single contact with Newtonian restitution. In contrast, the approach disclosed herein always conserves or dissipates energy during such impacts.

7.4 Non-zero solutions for multiple contacts. Other approaches predict that the tangential generalized reaction is zero, in certain situations involving multiple contacts, such as a ladder in contact with a wall and a floor, in direct contradiction to everyday observations of physical reality. Unlike these approaches, the approach disclosed herein give non-zero results in situations with multiple contacts, in agreement with physical intuition.

7.5 Correspondence to a continuous-time evolution problem. The disclosed approach corresponds to a well-defined continuous-time evolution problem, even at times where there are jumps in the velocity.

## 8. General

As an example, to avoid contacting an object, to contact an object, or to manipulate (e.g., interact with, move, grasp, etc.) an object, a control module of the vehicle 6a may actuate one or more components of the vehicle 6a to steer the vehicle 6a and/or decelerate or accelerate the vehicle 6a based on one or more parameters determined herein. As another example, to avoid contacting an object, to contact an object, or to manipulate (e.g., interact with, move, grasp, etc.) an object, a control module of the robot 6b may actuate one or more components of the robot 6b to steer the robot 6b and/or decelerate or accelerate the robot 6b, or move one or more components (e.g., arms) of the robot 6b based on one or more parameters determined herein. Similarly, the disclosure may also be applied to an autonomous floating machine (e.g., submarine) or autonomous flying machine (e.g., drone). Accordingly, such autonomous objects (which may be fully or partially autonomous), in order to avoid contacting an object, to contact an object, or to manipulate an object, may be configured to actuate one or more components of the autonomous object to steer the autonomous object and/or decelerate or accelerate the autonomous object based on one or more parameters determined herein.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrase at least one of A, B, and C should be construed to mean a logical (A OR B OR C), using a non-exclusive logical OR, and should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Javascript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®. The following is a list of further preferred embodiments of the invention:

1. A computer-implemented method, executed by one or more processors and memory, for determining for an object having a set of two or more contacts and having at time t an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$, the method comprising:

computing a generalized force $f$ over the interval $h$, the generalized force being a summary of forces acting on the object other than forces due to the set of contacts, and which is used to define energy over the interval $h$;

computing a normal generalized reaction impulse $r_n$ acting on the object;
computing a tangential generalized reaction impulse $r_t$ acting on the object; and based on the tangential generalized reaction impulse $r_t$, computing the end-of-interval generalized position $q_{t+h}$ and the end-of-interval generalized velocity $\dot{q}_{t+h}$ of the object;

wherein the computing the tangential generalized reaction impulse $r_t$ further includes applying the following constraints to an objective function minimizing energy over the interval $h$:

(a) associating each contact in the set of contacts with a friction cone in a space of generalized impulses to define a set of friction cones;
(b) summing one term from each friction cone in the set of friction cones, minus the normal generalized reaction impulse $r_n$; and
(c) constraining the tangential generalized reaction impulse $r_t$ to be orthogonal to the normal generalized reaction impulse $r_n$ and to have a non-positive inner product with the normal direction of each contact in the set of contacts.

2. The method of embodiment 1 further comprising computing an intermediate generalized position $q_m$ of the object over the interval $h$ by taking a time-step duration that is of length h/2.

3. The method of embodiment 2 wherein the intermediate generalized position $q_m$ is given by a midpoint generalized position at time $t_m = t + h/2$ by computing:

$$q_m \leftarrow q_t + \frac{h}{2}K(q_t)\dot{q}_t,$$

where K is a matrix-valued function.

4. The method of embodiment 3 wherein the generalized force $f$ over the interval $h$ is given by $M_m^{-1}f_m$ , where $M_m$ is the midpoint mass matrix and $f_m$ is the midpoint force.

5. The method of embodiment 4, wherein the determining the end-of-interval generalized velocity $\dot{q}_{t+h}$ is determined by computing:

$$\dot{q}_{t+h} \leftarrow \dot{q}_t + hM_m^{-1}f_m + M_m^{-1}(r_n + r_t).$$

6. The method of embodiment 5, wherein the determining the end-of-interval generalized velocity $\dot{q}_{t+h}$ is determined by computing an end-of-interval free-velocity $\dot{q}_f$ given by:

$$\dot{q}_f \leftarrow \dot{q}_t + hM_m^{-1}f_m.$$

7. The method of embodiment 6 wherein the objective function corresponding to minimizing energy over the interval $h$ is given by:

$$\left\| M_m^{-1/2}\left(M_m\dot{q}_f + r_t\right) \right\|_2.$$

8. The method of embodiment 5, wherein the determining the end-of-interval generalized position $q_{t+h}$ is determined by computing:

$$q_{t+h} \leftarrow q_m + \frac{h}{2}\dot{q}_{t+h}.$$

9. The method of embodiment 2, wherein the computing the normal generalized reaction impulse $r_n$ is approximated over the interval $h$ by computing:

$$r_n \leftarrow \sum_{j\in J_m}\left(\Lambda_j^+ + \Lambda_j^-\right)n_{j,m}^*,$$

where $\Lambda_j^+$ and $\Lambda_j^-$ are Lagrange multipliers and $n_{j,m}^*$ are vectors.

10. The method of embodiment 9 wherein the one term from each friction cone is determined in a friction cone by multiplying a tangential contact Jacobian by a tangential cone-position variable $w$ and adding it to the result of multiplying a normal contact Jacobian by a normal cone-position variable y.

11. The method of embodiment 1 wherein the end-of-interval generalized position $q_{t+h}$ and the end-of-interval generalized velocity $\dot{q}_{t+h}$ of the object are computed to perform one of system identification, trajectory optimization, learning control policies, and design of mechanical systems.

12. The method of embodiment 1 further comprising, based on at least one of the end-of-interval generalized position $q_{t+h}$ and the end-of-interval generalized velocity $\dot{q}_{t+h}$ of the object, at least one of steering a vehicle, accelerating the vehicle, and decelerating the vehicle.

13. The method of embodiment 1 further comprising, based on at least one of the end-of-interval generalized position $q_{t+h}$ and the end-of-interval generalized velocity $\dot{q}_{t+h}$ of the object, actuating a component of the object, wherein the object is a robot.

14. A computer-implemented method, executed by one or more processors and memory, for determining for an object having a set of two or more contacts and having at time t an initial generalized position $q_t$ and an initial generalized velocity $\dot{q}_t$, the object's generalized acceleration $\ddot{q}_t$, the method comprising:

computing a generalized force $f$ which is a summary of forces acting on the object other than forces due to the set of contacts;

computing a normal generalized reaction force $R_n$ acting on the object;

computing a tangential generalized reaction force $R_t$ acting on the object using the computed generalized force $f$ to account for contacts associated with zero relative velocity at time t; and

using the tangential generalized reaction force $R_t$ to compute the generalized acceleration $\ddot{q}_t$ of the object;

wherein the computing the tangential generalized reaction force $R_t$ further comprises applying the following constraints to an objective function maximizing power dissipated by friction:

(a) associating each contact in the set of contacts with a friction cone in a space of generalized impulses to define a set of friction cones;

(b) summing one term from each friction cone in the set of friction cones, minus the normal generalized reaction force $R_n$; and

(c) constraining the tangential generalized reaction force $R_t$ to be orthogonal to the normal generalized reaction force $R_n$ and to have a non-positive inner product with the normal direction of each contact in the set of contacts.

15. The method of embodiment 14 wherein the object is a robot.

16. The method of embodiment 14 wherein the power dissipated by friction is given by minus the scalar product of the tangential generalized reaction force $R_t$ and the initial generalized velocity $\dot{q}_t$.

17. The method of embodiment 14 wherein the end-of-interval generalized position $q_{t+h}$ and the end-of-interval generalized velocity $\dot{q}_{t+h}$ of the object are computed to perform one of system identification, trajectory optimization, learning control policies, and design of mechanical systems.

18. The method of embodiment 1 wherein (c) is automatically satisfied when properties of friction cones in the set of friction cones satisfy a preset condition.

19. The method of embodiment 18 wherein the preset condition when the properties of friction cones in the set of friction cones are automatically satisfied in step (c) is when each friction cone $\tilde{F}_j$ in the set of friction cones satisfies:

$$\tilde{F}_j := \left\{ x \left( P^* c + n_j^* \right) \mid x \geq 0, c \in C_j^* \right\},$$

where P* is a projection matrix and $n_j^*$ are normal directions for $j \in J$,

and $C_j^*$ is a shifted cross section of convex cone $F_j$ that is defined as:

$$C_j^* := \left\{ f - n_j^* : f \in F_j, \left( f - n_j^* \right)^\top M^{-1} n_j^* = 0 \right\},$$

where $f$ is a generalized force or impulse and $M^{-1}$ is the inverse mass matrix.

20. A computer-implemented method, executed by one or more processors and memory, for determining, in a mechanical system with an object having a set of two or more contacts, a tangential generalized reaction due to friction given a normal generalized reaction, the method comprising:

associating each contact of the object in the set of contacts with a friction cone and a normal direction in a space of generalized forces or impulses to define a set of friction cones;

building a total friction cone as the sum of the set of friction cones and a normal cone as the cone generated by these normal directions; and

constraining the sum of the normal generalized reaction and tangential generalized reaction to lie in the total friction cone while the tangential generalized reaction is constrained to be orthogonal to the normal generalized reaction and to lie in a polar cone of the normal cone;

outputting the tangential generalized reaction;

wherein each friction cone is a set of vectors that is closed under addition and multiplication by a non-negative scalar; and

wherein the polar cone of a given friction cone is the set of vectors that have a non-positive inner product with all vectors in the given friction cone.

21. The method of embodiment 20 wherein the mechanical system includes a robot and one or more objects.

22. A computer-implemented method, executed by one or more processors and memory, for determining, in a mechanical system with an object having a set of two or more contacts, a tangential generalized reaction due to friction given a normal generalized reaction, the method comprising:

associating each contact of the object in the set of contacts with a friction cone and a normal direction in a space of generalized forces or impulses, the associating defining a set of friction cones; and

constraining the tangential generalized reaction to be a sum with one term from each friction cone in the set of friction cones, minus the normal generalized reaction; and

outputting the tangential generalized reaction,

wherein the tangential generalized reaction is constrained to be orthogonal to the normal generalized reaction and have a non-positive inner product with each contact's normal direction.

23. The method of embodiment 22 wherein the mechanical system includes a robot and one or more objects.

24. The method of embodiment 22 wherein the one term from each friction cone is determined in a friction cone by multiplying a tangential contact Jacobian by a tangential cone-position variable $w$ and adding it to the result of multiplying a normal contact Jacobian by a normal cone-position variable y.

25. A system for determining, for an object having a set of two or more contacts and having at time t an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$, the system comprising:

one or more processors; and

memory including code that, when executed by the one or more processors perform to:

compute a generalized force $f$ over the interval, which is a summary of forces acting on the system other than forces due to the set of contacts, and which is used to define energy over the interval $h$;

compute a normal generalized reaction impulse $r_n$ acting on the object;

compute a tangential generalized reaction impulse $r_t$ acting on the object; and

based on the tangential generalized reaction impulse $r_t$, compute the end-of-interval generalized position $q_{t+h}$ and the end-of-interval generalized velocity $\dot{q}_{t+h}$ of the object,

wherein the computing the tangential generalized reaction impulse $r_t$ further includes applying the following constraints to an objective function minimizing energy over the interval $h$:

(a) associating each contact in the set of contacts with a friction cone in a space of generalized impulses to define a set of friction cones;

(b) summing one term from each friction cone in the set of friction cones, minus the normal generalized reaction impulse $r_n$; and

(c) constraining the tangential generalized reaction impulse $r_t$ to be orthogonal to the normal generalized reaction impulse $r_n$ and to have a non-positive inner product with the normal direction of each contact in the set of contacts.

26. The system of embodiment 25 wherein the memory further includes code for a learning model that, when executed by the one or more processors, performs the following functions including computing an intermediate generalized position $q_m$ of the object over the interval $h$ by taking a time-step duration that is of length h/2.

27. The system of embodiment 26 wherein the intermediate generalized position $q_m$ is given by a midpoint generalized position at time $t_m = t + h/2$ by computing:

$$q_m \leftarrow q_t + \frac{h}{2} K(q_t)\dot{q}_t,$$

where $K$ is a matrix-valued function.

28. The system of embodiment 27 wherein the generalized force $f$ over the interval $h$ is given by $M_m^{-1} f_m$ , where $M_m$ is the midpoint mass matrix and $f_m$ is the midpoint force.

29. The system of embodiment 28, wherein the determining the end-of-interval generalized velocity $\dot{q}_{t+h}$ is determined by computing:

$$\dot{q}_{t+h} \leftarrow \dot{q}_t + h M_m^{-1} f_m + M_m^{-1} (r_n + r_t).$$

30. The system of embodiment 29, wherein the determining the end-of-interval generalized velocity $\dot{q}_{t+h}$ is determined by computing an end-of-interval free-velocity $\dot{q}_f$ given by:

$$\dot{q}_f \leftarrow \dot{q}_t + h M_m^{-1} f_m.$$

31. The system of embodiment 30 wherein the objective function corresponding to minimizing energy over the interval $h$ is given by:

$$\left\| M_m^{-1/2} \left( M_m \dot{q}_f + r_t \right) \right\|_2.$$

32. The system of embodiment 29, wherein the determining the end-of-interval generalized position $q_{t+h}$ is determined by computing:

$$q_{t+h} \leftarrow q_m + \frac{h}{2} \dot{q}_{t+h} .$$

33. The system of embodiment 26, wherein the computing the normal generalized reaction impulse $r_n$ is approximated over the interval $h$ by computing:

$$r_n \leftarrow \sum_{j \in J_m} \left( \Lambda_j^+ + \Lambda_j^- \right) n_{j,m}^*,$$

where $\Lambda_j^+$ and $\Lambda_j^-$ are Lagrange multipliers and $n_{j,m}^*$ are vectors.

34. The system of embodiment 33 wherein the one term from each friction cone is determined in a friction cone by multiplying a tangential contact Jacobian by a tangential cone-position variable $w$ and adding it to the result of multiplying a normal contact Jacobian by a normal cone-position variable $\gamma$.

35. The system of embodiment 25 wherein the end-of-interval generalized position $q_{t+h}$ and the end-of-interval generalized velocity $\dot{q}_{t+h}$ of the object is computed to perform one of system identification, trajectory optimization, learning control policies, and design of mechanical systems.

36. A system, for determining for an object having a set of two or more contacts and having at time $t$ an initial generalized position $q_t$ and an initial generalized velocity $\dot{q}_t$, the object's generalized acceleration $\ddot{q}_t$, the system comprising:

one or more processors;

memory including code that, when executed by the one or more processors perform to:

compute a generalized force $f$ which is a summary of forces acting on the system other than forces due to the set of contacts;

compute a normal generalized reaction force $R_n$ acting on the object;

compute a tangential generalized reaction force $R_t$ acting on the object using the computed generalized force $f$ to account for contacts associated with zero relative velocity at time $t$; and

based on the tangential generalized reaction force $R_t$, compute the generalized acceleration $\ddot{q}_t$ of the object,

wherein the computing the tangential generalized reaction force $R_t$ further includes applying the following constraints to an objective function maximizing power dissipated by friction:

(a) associating each contact in the set of contacts with a friction cone in a space of generalized impulses to define a set of friction cones;

(b) summing one term from each friction cone in the set of friction cones, minus the normal generalized reaction force $R_n$; and

(c) constraining the tangential generalized reaction force $R_t$ to be orthogonal to the normal generalized reaction force $R_n$ and to have a non-positive inner product with the normal direction of each contact in the set of contacts.

37. The system of embodiment 36 wherein the mechanical system is a robot and one or more objects.

38. The system of embodiment 36 wherein the power dissipated by friction is given by minus the scalar product of the tangential generalized reaction force $R_t$ and the initial generalized velocity $\dot{q}_t$.

39. The system of embodiment 36 wherein the end-of-interval generalized position $q_{t+h}$ and the end-of-interval generalized velocity $\dot{q}_{t+h}$ of the object is computed to perform one of system identification, trajectory optimization, learning control policies, and design of mechanical systems.

## Claims

1. A computer-implemented method (700), executed by one or more processors and memory, for determining for an object having a set of two or more contacts and having at time t an initial generalized position $q_t$ and an initial generalized velocity $\dot{q}_t$, the object's end-of-interval generalized position $q_{t+h}$ and end-of-interval generalized velocity $\dot{q}_{t+h}$ after an interval $h$, the method comprising:

computing (704) a generalized force $f$ over the interval $h$, the generalized force being a summary of forces acting on the object other than forces due to the set of contacts, and which is used to define energy over the interval $h$;

computing (706) a normal generalized reaction impulse $r_n$ acting on the object;

computing (710) a tangential generalized reaction impulse $r_t$ acting on the object; and

based on the tangential generalized reaction impulse $r_t$, computing (712) the end-of-interval generalized position $q_{t+h}$ and the end-of-interval generalized velocity $\dot{q}_{t+h}$ of the object;

wherein the computing (712) the tangential generalized reaction impulse $r_t$ further includes applying the following constraints to an objective function minimizing energy over the interval $h$:

(a) associating each contact in the set of contacts with a friction cone in a space of generalized impulses to define a set of friction cones;

(b) summing one term from each friction cone in the set of friction cones, minus the normal generalized reaction impulse $r_n$; and

(c) constraining the tangential generalized reaction impulse $r_t$ to be orthogonal to the normal generalized reaction impulse $r_n$ and to have a non-positive inner product with the normal direction of each contact in the set of contacts,

further comprising one of:

(i) based on at least one of the end-of-interval generalized position $q_{t+h}$ and the end-of-interval generalized velocity $\dot{q}_{t+h}$ of the object, actuating a component of the object, wherein the object is an autonomous object, and

(ii) based on at least one of the end-of-interval generalized position $q_{t+h}$ and the end-of-interval generalized velocity $\dot{q}_{t+h}$ of the object, at least one of steering, accelerating, and decelerating an autonomous object so that the autonomous object avoids contacting the object, contacts the object, or manipulates the object.

2. The method of claim 1, wherein in case (i), the autonomous object is a robot, or wherein in case (ii), the autonomous object is a vehicle.

3. The method of claim 1 further comprising computing an intermediate generalized position $q_m$ of the object over the interval $h$ by taking a time-step duration that is of length $h/2$.

4. The method of claim 2 wherein the intermediate generalized position $q_m$ is given by a midpoint generalized position at time $t_m = t + h/2$ by computing:

$$q_m \leftarrow q_t + \frac{h}{2} K(q_t)\dot{q}_t,$$

where $K$ is a matrix-valued function, and/or

wherein the computing the normal generalized reaction impulse $r_n$ is approximated over the interval $h$ by computing:

$$r_n \leftarrow \sum_{j \in J_m} \left( \Lambda_j^+ + \Lambda_j^- \right) n_{j,m}^*,$$

where $\Lambda_j^+$ and $\Lambda_j^-$ are Lagrange multipliers and $n_{j,m}^*$ are vectors.

5. The method of claim 3 wherein the generalized force $f$ over the interval $h$ is given by $M_m^{-1} f_m$ , where $M_m$ is the midpoint mass matrix and $f_m$ is the midpoint force, and/or

wherein the determining the end-of-interval generalized velocity $\dot{q}_{t+h}$ is determined by computing:

$$\dot{q}_{t+h} \leftarrow \dot{q}_t + h M_m^{-1} f_m + M_m^{-1}(r_n + r_t).$$

6. The method of claim 5, wherein the determining the end-of-interval generalized velocity $\dot{q}_{t+h}$ is determined by computing an end-of-interval free-velocity $\dot{q}_f$ given by:

$$\dot{q}_f \leftarrow \dot{q}_t + hM_m^{-1}f_m,$$

and/or
wherein the determining the end-of-interval generalized position $q_{t+h}$ is determined by computing:

$$q_{t+h} \leftarrow q_m + \frac{h}{2}\dot{q}_{t+h} .$$

7. The method of claim 6 wherein the objective function corresponding to minimizing energy over the interval $h$ is given by:

$$\left\| M_m^{-1/2}\left(M_m\dot{q}_f + r_t\right)\right\|_2.$$

8. The method of one of claims 1-7, wherein (c) is automatically satisfied when properties of friction cones in the set of friction cones satisfy a preset condition.

9. The method of claim 8, wherein the preset condition when the properties of friction cones in the set of friction cones are automatically satisfied in step (c) is when each friction cone $\tilde{F}_j$ in the set of friction cones satisfies:

$$\tilde{F}_j := \left\{x\left(P^*c + n_j^*\right) \mid x \geq 0, c \in C_j^*\right\},$$

where $P^*$ is a projection matrix, $n_j^*$ are normal directions for $j \in J$, and $C_j^*$ is a shifted cross section of convex cone $F_j$ that is defined as:

$$C_j^* := \left\{f - n_j^* : f \in F_j, \left(f - n_j^*\right)^\top M^{-1} n_j^* = 0\right\},$$

where $f$ is a generalized force or impulse and $M^{-1}$ is an inverse mass matrix.

10. The method of one of claims 1-9 wherein the one term from each friction cone is determined in a friction cone by multiplying a tangential contact Jacobian by a tangential cone-position variable $w$ and adding it to the result of multiplying a normal contact Jacobian by a normal cone-position variable $\gamma$, and/or
wherein the end-of-interval generalized position $q_{t+h}$ and the end-of-interval generalized velocity $\dot{q}_{t+h}$ of the object are computed to perform one of system identification, trajectory optimization, learning control policies, and design of mechanical systems.

11. A computer-implemented method (700), executed by one or more processors and memory, for determining for an object having a set of two or more contacts and having at time t an initial generalized position $q_t$ and an initial generalized velocity $\dot{q}_t$, the object's generalized acceleration $\ddot{q}_t$, the method comprising:

computing (704) a generalized force $f$ which is a summary of forces acting on the object other than forces due to the set of contacts;
computing (706) a normal generalized reaction force $R_n$ acting on the object;
computing (710) a tangential generalized reaction force $R_t$ acting on the object using the computed generalized force $f$ to account for contacts associated with zero relative velocity at time $t$; and
using the tangential generalized reaction force $R_t$ to compute (712) the generalized acceleration $\ddot{q}_t$ of the object;
wherein the computing (710) the tangential generalized reaction force $R_t$ further comprises applying the following constraints to an objective function maximizing power dissipated by friction:

(a) associating each contact in the set of contacts with a friction cone in a space of generalized impulses to define a set of friction cones;

(b) summing one term from each friction cone in the set of friction cones, minus the normal generalized reaction force $\boldsymbol{R}_n$; and

(c) constraining the tangential generalized reaction force $\boldsymbol{R}_t$ to be orthogonal to the normal generalized reaction force $\boldsymbol{R}_n$ and to have a non-positive inner product with the normal direction of each contact in the set of contacts, further comprising one of:

> based on the generalized acceleration $\ddot{\boldsymbol{q}}_t$ of the object, actuating a component of the object, wherein the object is an autonomous object, and
>
> based on the generalized acceleration $\ddot{\boldsymbol{q}}_t$ of the object, at least one of steering, accelerating, and decelerating an autonomous object so that the autonomous object avoids contacting the object, contacts the object, or manipulates the object.

12. The method of claim 11 wherein the power dissipated by friction is given by minus the scalar product of the tangential generalized reaction force $\boldsymbol{R}_t$ and the initial generalized velocity $\dot{\boldsymbol{q}}_t$.

13. The method of claim 11 or claim 12,

> wherein, to define the set of friction cones, each contact of the object in the set of contacts is associated with a friction cone and a normal direction in a space of generalized forces or impulses; and
> wherein the method further comprises:
>
> > building a total friction cone as the sum of the set of friction cones and a normal cone as the cone generated by these normal directions;
> > constraining the sum of the normal generalized reaction and tangential generalized reaction to lie in the total friction cone while the tangential generalized reaction is constrained to be orthogonal to the normal generalized reaction and to lie in a polar cone of the normal cone;
> > outputting the tangential generalized reaction;
> > wherein each friction cone is a set of vectors that is closed under addition and multiplication by a non-negative scalar; and
> > wherein the polar cone of a given friction cone is the set of vectors that have a non-positive inner product with all vectors in the given friction cone.

14. A system for determining, in a mechanical system with an object having a set of two or more contacts, a tangential generalized reaction due to friction given a normal generalized reaction, the system comprising:

> one or more processors; and
> memory comprising instructions that, when executed by the one or more processors, cause the system to:
>
> > associate each contact of the object in the set of contacts with a friction cone and a normal direction in a space of generalized forces or impulses, the associating defining a set of friction cones; and
> > constrain the tangential generalized reaction to be a sum with one term from each friction cone in the set of friction cones, minus the normal generalized reaction; and
> > output the tangential generalized reaction,
> > wherein the tangential generalized reaction is constrained to be orthogonal to the normal generalized reaction and have a non-positive inner product with each contact's normal direction,
> > wherein the instructions, when executed by the one or more processors, further cause the system to:
> > based on the tangential generalized reaction, actuate a component of the object, wherein the object is an autonomous object, and
> > based on the tangential generalized reaction, at least one of steer, accelerate, and decelerate an autonomous object so that the autonomous object avoids contacting the object, contacts the object, or manipulates the object.

15. A computer-readable medium (713) comprising instructions that, when executed by a processing unit (712), cause the processing unit (712) to perform the method of any one of claims 1 to 13.

FIG. 1

For a mechanical system, receive as input *initial time*, *time-step duration*, *generalized coordinate*, and *generalized velocity* — 102

Compute midpoint values: *time, generalized position, mass matrix, force* and a *set of active constraints* — 104

For each *active contact in the set*, compute the *generalized normal direction, friction cone, restitution coefficient and friction coefficient* — 106

Estimate the *generalized force (e.g., using a free velocity) over the time-step* — 108

yes (normal and tangential reaction impulses = 0) — Free velocity admissible? — 110

no — 112

Compute the *normal generalized reaction impulse* over the *time step* (e.g., using Newton or Poisson's impact law) — 112

Compute the *tangential generalized reaction impulse* by minimizing the total energy at the end of the time-step, subject to the constraints that: (a) the tangential generalized reaction impulse is a sum over friction cones minus the *normal generalized reaction*; and (b) the *tangential generalized reaction impulse* has a non-positive inner product with each normal direction, and is orthogonal to the *normal generalized reaction* — 114

Compute the end-of-step generalized velocity by adding the *free velocity* to the *normal generalized reaction impulse* and *tangential generalized reaction impulse;* approximate the end-of-step generalized position by adding half a step of the end-of-step *generalized velocity* to the *midpoint generalized position* — 116

Output the end-of-step *generalized position* and *generalized velocity* — 118

**FIG. 2**

FIG. 3A

FIG. 3B

**FIG. 3C**

**FIG. 3D**

404 [normal cone $N$]

403 [normal reaction impulse $r_n$]

$r_n$

$r$

401 [total generalized reaction $r$ ]

402 [total friction cone $F$]

405 [tangential reaction $r_t$]

406 [polar cone $T$]

$r_t$

**FIG. 4**

502

```
"""
Time-stepping implementation.
"""

import numpy as np
import cvxpy as cp
from scipy.linalg import sqrtm


def step(t, q, qd, model, h):
    """Find the state of a mechanical system at time t+h.

    Given the initial time t (scalar) and state (q, qd), represented as
    np.narray's of shape (d,) for an appropriate d, a function 'model',
    described below and a time step h (positive scalar), the call

        tp, qp, qdp = step(t, q, qd, model, h)

    returns the new time tp=t+h and the approximate state qp, qdp at
    that time.

    The call d = model(t, q, qd) should return a dictionary with entries:
       M     - mass matrix: np.array of shape (d, d)
       f     - force vector: np.array of shape (d,)
       nstar - list of normal directions: each is a np.array of shape (d,)
       e     - list of restitutions: each is a scalar
       mu    - list of friction coefficients: each is a scalar
       Ht    - list of tangential bases for the friction cones:
                  each is a np.array of shape (d, dim[i]) for some dim[i]
       Hn    - list of normal bases for the friction cones:
                  each is a np.array of shape (d,)
    These lists should only contain values for the active constraints,
    and their elements should correspond e.g. nstar[i] should be for
    the same constraint as e[i]."""

    # midpoint values
    tm = t + h/2
    qm = q + (h/2)*qd
    data = model(tm, qm, qd)
    M, fm, nstar = data['M'], data['f'], data['nstar']
    Minv = np.linalg.inv(M)
    Mir = sqrtm(Minv)
    d = qd.size
    uf = qd + h*Minv@fm

    # quick escape if no constraints are active
    if not data['nstar']:
        tp = t + h
        qdp = uf
        qp = qm + (h/2)*qdp
        return tp, qp, qdp, data
```

**FIG. 5A**

504

```
# compression problem
u = cp.Variable(d)
constraints_c = [ns@u >= 0 for ns in nstar]
problem_c = cp.Problem(cp.Minimize(cp.quad_form(u-uf, M)/2),
                       constraints_c)
problem_c.solve()
lambda_m = np.array([c.dual_value for c in constraints_c])

# decompression problem
G = np.array([[na@nb for nb in nstar] for na in nstar])
b = np.array([na@u.value for na in nstar])
elambda_m = np.array(data['e'])*lambda_m
lambda_p = cp.Variable(b.shape[0])
constraints_d = [G@lambda_p + b >= 0, lambda_p - elambda_m >= 0]
problem_d = cp.Problem(
    cp.Minimize(cp.quad_form(lambda_p, G) + (b-G@elambda_m)@lambda_p),
    constraints_d)
problem_d.solve()
lam = lambda_m + lambda_p.value
rn = sum(lam[alpha] * nalpha for alpha, nalpha in enumerate(nstar))

# friction problem
rt_sum = -rn
constraints_f, w, gamma = [], [], []
for i in range(lam.shape[0]):
    Ht, Hn, mu = data['Ht'][i], data['Hn'][i], data['mu'][i]
    dim = Ht.shape[1]
    if lam[i] >= 0 and dim > 0:
        if not constraints_f:
            rt_var = cp.Variable(d)
        w.append(cp.Variable(dim))
        gamma.append(cp.Variable())
        term = Ht@w[-1] + Hn*gamma[-1]
        rt_sum = rt_sum + term
        constraints_f.append(cp.SOC(gamma[-1]*mu, w[-1]))
        if lam[i]==0:
            constraints_f.append(rt_var@(Minv@nstar[i]) <= 0)
        else:
            constraints_f.append(rt_var@(Minv@nstar[i]) == 0)
if constraints_f:
    s = cp.Variable()
    rt_var = cp.Variable(d)
    constraints_f = ([cp.SOC(s, Mir@(rt_var+(M@uf))),
                     rt_var == rt_sum, rt_var@(Minv@rn) == 0]
                     + constraints_f)
    problem_f = cp.Problem(cp.Minimize(s), constraints_f)
    problem_f.solve()
    rt = rt_var.value
else:
    rt = np.zeros_like(rn)

# output new state
tp = t + h
qdp = uf + Minv@(rn + rt)
qp = qm + (h/2)*qdp
return tp, qp, qdp
```

**FIG. 5B**

602

Receive and/or determine for a mechanical system: the current generalized position $q$; the current generalized velocity $\dot{q}$; the current normal generalized reaction force $R_n$; and set of active constraints $J(q)$

604

Access and/or determine several associated functions and/or parameters that describe the mechanical system: the mass matrix $M(q)$ at the current configuration; the total generalized force $f(t, q, \dot{q})$, other than reaction forces; the generalized normal direction $n_j^*(q)$ for each $j \in J(q)$; the matrix $H_{n,j}(q)$, vector $H_{t,j}(q)$ and scalar $\mu_j$ describing friction cone $j \in J(q)$

606

Determine time derivatives $\dot{H}_{n,j}(q, \dot{q})$ and $\dot{H}_{t,j}(q, \dot{q})$ of the matrix $H_{n,j}(q)$ and vector $H_{t,j}(q)$ for $j$ in $J(q)$

608

Solve a first second-order cone program to maximize the power dissipated by contacts that are currently moving

610

Solve a second second-order cone program to resolve possible ambiguity about the tangential reaction force due to contacts which are initially sticking

612

Compute vector $R_t$ that solves the second second-order cone program, which is the value of the tangential reaction force

614

Output value of vector $R_t$ and/or the generalized acceleration $\ddot{q}$

## FIG. 6

**For a mechanical system, receive input values for an object with a set of two or more contacts, including an initial generalized position and an initial generalized velocity of the object at time $t$** — 702

**Compute a generalized force $f_m$** — 704

**Compute a normal generalized reaction impulse/force** — 706

**Compute a tangential generalized reaction impulse/force by applying the following constraints to an objective function:** — 710

(a) associating each contact in the set of contacts with a friction cone in a space of generalized impulses/forces to define a set of friction cones;

(b) summing one term from each friction cone in the set of friction cones, minus the normal generalized reaction impulse/force; and (c) constraining the tangential generalized reaction impulse/force to be orthogonal to the normal generalized reaction impulse/force and to have a non-positive inner product with the normal direction of each contact in the set of contacts

**Use the tangential generalized reaction impulse/force to compute [end-of-interval generalized position and velocity]/[generalized acceleration]** — 712

**Output the [end-of-interval generalized position and velocity]/[generalized acceleration]** — 714

## FIG. 7

Europäisches
Patentamt

European
Patent Office

Office européen
des brevets

# EUROPEAN SEARCH REPORT

Application Number

EP 24 16 4887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/055680 A1 (CHAVAN DAFLE NIKHIL [US] ET AL) 20 February 2020 (2020-02-20) * figures 1-5 * * claims 1-33 * * paragraph [0048] - paragraph [0070] * | 1-15 | INV. B25J9/16 |
| A | CN 114 683 281 A (LEYPOLY SHENZHEN ROBOT TECH LIMITED COMPANY) 1 July 2022 (2022-07-01) * claims 1-8 * | 1-15 | |

TECHNICAL FIELDS
SEARCHED (IPC)

B25J
G05B

The present search report has been drawn up for all claims

| Place of search | Date of completion of the search | Examiner |
|---|---|---|
| The Hague | 3 September 2024 | Lorenzo Barreiro, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 4887

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | Publication date | Patent family member(s) | Publication date |
|---|---|---|---|
| US 2020055680 A1 | 20-02-2020 | US 2020055680 A1<br>WO 2020041117 A1 | 20-02-2020<br>27-02-2020 |
| CN 114683281 A | 01-07-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEXANDRE CHARLES ; FABIEN CASENAVE ; CHRISTOPH GLOCKER.** A catching-up algorithm for multibody dynamics with impacts and dry friction. *Computer Methods in Applied Mechanics and Engineering,* 2018, vol. 334, 208-237
- **ROY FEATHERSTONE et al.** Rigid Body Dynamics Algorithms. Springer, 2008
- **JUSTIN CARPENTIER.** *Analytical Inverse of the Joint Space Inertia Matrix,* 2018, (18125
- **CHRISTOPH GLOCKER.** On frictionless impact models in rigid-body systems. *Philosophical Transactions of the Royal Society of London. Series A: Mathematical, Physical and Engineering Sciences,* 2001, vol. 359 (1789), 2385-2404
- Comparisons of multiple-impact laws for multibody systems: Moreau's law, binary impacts, and the LZB approach. **NGOC SON NGUYEN ; BERNARD BROGLIATO.** Advanced Topics in Nonsmooth Dynamics, Transactions of the European Network for Nonsmooth Dynamics. Springer International Publishing AG, 2018, 1-45
- **JEAN-JACQUES MOREAU.** Décomposition orthogonale d'un espace hilbertien selon deux cônes mutuellement polaires. *Comptes rendus hebdomadaires des séances de l'Académie des sciences,* 1962, vol. 255, 238-240
- **MOREAU ; ALEXANDRE CHARLES.** *Dynamique des systèmes de solides rigides avec impacts et frottement,* 1962
- **S. DIAMOND ; S. BOYD.** CVXPY: A Python-embedded modeling language for convex optimization. *Journal of Machine Learning Research,* 2016
- **AKSHAY AGRAWAL ; ROBIN VERSCHUEREN ; STEVEN DIAMOND ; STEPHEN BOYD.** A rewriting system for convex optimization problems. *Journal of Control and Decision,* 2018, vol. 5 (1), 42-60
- **M. S. LOBO ; L. VANDENBERGHE ; S. BOYD ; H. LEBRET.** Second-order cone programming. *Linear algebra and Applications,* 1998, vol. 284, 193-228
- **HWANGBO, J. ; LEE, J ; HUTTER, M.** Per-contact iteration method for solving contact dynamics. *IEEE Robotics and Automation Letters,* 2018, vol. 3 (2), 895-902
- **STEWART, DAVID E.** Rigid-body dynamics with friction and impact. *SIAM Review,* 2000, vol. 42 (1), 3-39

- **M. ANITESCU ; F. POTRA.** Formulating dynamic multi-rigid-body contact problems with friction as solvable linear complementarity problems. *Nonlinear Dynamics,* November 1997, vol. 14 (3), 231-247
- **ACARY, VINCENT ; BERNARD BROGLIATO.** Numerical methods for nonsmooth dynamical systems: applications in mechanics and electronics. Springer Science & Business Media, 2008
- **GALVEZ, JAVIER ; FEDERICO J. CAVALIERI ; ALEJANDRO COSIMO ; OLIVIER BRÜLS ; ALBERTO CARDONA.** A nonsmooth frictional contact formulation for multibody system dynamics. *International Journal for Numerical Methods in Engineering,* 2020, vol. 121 (16), 3584-3609
- **BULLOCK ; JAMES MR ; PATRICK DRECHSLER ; WALTER FEDERLE.** Comparison of smooth and hairy attachment pads in insects: friction, adhesion and mechanisms for direction-dependence. *Journal of Experimental Biology,* 2008, vol. 211 (20), 3333-3343
- **KANE ; THOMAS R. ; DAVID A. LEVINSON.** Dynamics, theory and applications. McGraw Hill, 1985, 118
- **O.M. BRAUN ; M. PEYRARD.** Dependence of kinetic friction on velocity: Master equation approach. *Phys. Rev.,* 2011, vol. 83, 046129
- **LE LIDEC ; QUENTIN ; IGOR KALEVATYKH ; IVAN LAPTEV ; CORDELIA SCHMID ; JUSTIN CARPENTIER.** Differentiable simulation for physical system identification. *IEEE Robotics and Automation Letters,* 2021, vol. 6 (2), 3413-3420
- **BUDHIRAJA, ROHAN ; JUSTIN CARPENTIER ; CARLOS MASTALLI ; NICOLAS MANSARD.** Differential dynamic programming for multi-phase rigid contact dynamics. *IEEE-RAS 18th International Conference on Humanoid Robots (Humanoids,* 2018, 1-9
- **NEUNERT, MICHAEL ; MARKUS STÄUBLE ; MARKUS GIFTTHALER ; CARMINE D. BELLICOSO ; JAN CARIUS ; CHRISTIAN GEHRING ; MARCO HUTTER ; JONAS BUCHLI.** Whole-body nonlinear model predictive control through contacts for quadrupeds. *IEEE Robotics and Automation Letters,* 2018, vol. 3 (3), 1458-1465

- **LEE, JOONHO ; JEMIN HWANGBO ; LORENZ WELLHAUSEN ; VLADLEN KOLTUN ; MARCO HUTTER.** Learning quadrupedal locomotion over challenging terrain. *Science Robotics,* 2020, vol. 5 (47
- MAT: Multi-Fingered Adaptive Tactile Grasping via Deep Reinforcement Learning. **WU, BOHAN ; IRE-TIAYO AKINOLA ; JACOB VARLEY ; PETER K. ALLEN.** Conference on Robot Learning. PMLR, 2020, 142-161
- Value learning from trajectory optimization and Sobolev descent: A step toward reinforcement learning with superlinear convergence properties. **ARAG, AMIT ; SÉBASTIEN KLEFF ; LÉO SACI ; NICOLAS MANSARD ; OLIVIER STASSE.** 2022 International Conference on Robotics and Automation (ICRA). IEEE, 2022, 01-07
- Adapting rapid motor adaptation for bipedal robots. **KUMAR, ASHISH ; ZHONGYU LI ; JUN ZENG ; DEEPAK PATHAK ; KOUSHIL SREENATH ; JI-TENDRA MALIK.** 2022 IEEE/RSJ International Conference on Intelligent Robots and Systems (IROS). IEEE, 2022, 1161-1168
- **XU, JIE ; TAO CHEN ; LARA ZLOKAPA ; MICHAEL FOSHEY ; WOJCIECH MATUSIK ; SHINJIRO SUEDA ; PULKIT AGRAWAL.** An End-to-End Differentiable Framework for Contact-Aware Robot Design. *Robotics: Science & Systems.,* 2021
- **GEILINGER, MORITZ ; DAVID HAHN ; JONAS ZEHNDER ; MORITZ BÄCHER ; BERNHARD THOMASZEWSKI ; STELIAN COROS.** ADD: Analytically differentiable dynamics for multi-body systems with frictional contact. *ACM Transactions on Graphics (TOG),* 2020, vol. 39 (6), 1-15
- **DORMAND, J. R ; PRINCE, P. J.** A family of embedded Runge-Kutta formulae. *Journal of Computational and Applied Mathematics,* 1980, vol. 6 (1), 19-26
- **PATRICK BALLARD.** The dynamics of discrete mechanical systems with perfect unilateral constraints. *Archive for Rational Mechanics and Analysis,* 2000, vol. 154